# FASCICULE DE BREVET EUROPEEN

(11) **EP 4 307 901 B1**
(45) Date de publication et mention de la délivrance du brevet: **03.09.2025**
(21) Numéro de dépôt: 22714902.8
(22) Date de dépôt: 17.03.2022
(51) Int. Cl.: A01N 65/03

(54) **UTILISATION D'UN EXTRAIT D'ALGUE ROUGE COMME AGENT NEMATOSTATIQUE ET/OU NEMATICIDE**
VERWENDUNG EINES ROTALGENEXTRAKTS ALS NEMATOSTATISCHES UND/ODER NEMATIZIDES MITTEL
USE OF A RED ALGA EXTRACT AS NEMATOSTATIC AND/OR NEMATICIDAL AGENT

(30) Priorité: 18.03.2021 FR 2102737
(43) Date de publication de la demande: 24.01.2024
(73) Titulaire: Agro Innovation International, 35400 Saint-Malo (FR)
(72) Inventeur: NGUEMA-ONA, Emmanuel Eric, 35400 SAINT-MALO (FR)
(74) Mandataire: Cabinet Beau de Loménie
(86) Numéro de dépôt international: PCT/FR2022/050483
(87) Numéro de publication internationale: WO 2022/195230

(56) Documents cités:
- FR-A1- 3 102 038
- GHAREEB REHAB Y. ET AL: "The nematicidal potentiality of some algal extracts and their role in enhancement the tomato defense genes against root knot - nematodes", vol. 29, no. 1, 1 December 2019 (2019-12-01), XP055852719, Retrieved from the Internet <URL:https://ejbpc.springeropen.com/track/pdf/10.1186/s41938-019-0153-5.pdf> DOI: 10.1186/s41938-019-0153-5
- MAESTRINI MICHELA ET AL: "Evaluation of the anthelmintic properties of a traditional remedy based on a mixture of red algae using an in vitro assay on gastrointestinal nematodes of donkeys", vol. 4, no. 1, 21 January 2021 (2021-01-21), pages 1 - 7, XP055852723, ISSN: 2618-074X, Retrieved from the Internet <URL:https://pisrt.org/psrpress/j/ojc/2021/1/evaluation-of-the-anthelminthic-properties-of-a-traditional-remedy-based-on-a-mixture-of-red-algae-using-an-in-vitro-assay-on-gastrointestinal-nematodes-of-donkeys.pdf> DOI: 10.30538/psrp-ojc2021.0018

## Description

### Domaine Technique

L'invention concerne l'utilisation d'un extrait d'algue rouge comme agent nématostatique vis-à vis des nématodes et/ou comme agent nématicide vis-à-vis des nématodes.

### Technique antérieure

Les nématodes sont des animaux vermiformes, dans la très large majorité des cas de taille microscopique. Ils se trouvent dans pratiquement tous les milieux, à la fois sous forme de parasites ou d'organismes libres. Ils sont dépendants de la présence d'eau pour leur survie, notamment d'eau interstitielle pour les nématodes présents dans les sols. Le cycle de vie de nématodes passe nécessairement par une phase larvaire (on parle généralement de juvéniles) et une phase mobile, conférant aux nématodes la capacité de se déplacer dans les sols sur de courtes distances.

Les nématodes phyto-parasites sont capables d'occasionner des dégâts significatifs aux plantes cultivées et sont extrêmement répandus. Il existerait plus de 4000 espèces de nématodes phyto-parasites identifiés.

En effet, ils parasitent un nombre important de cultures d'intérêt économique et sont présents dans tous les types de sols, ce qui impactent la production agricole. Les nématodes phyto-parasites peuvent avoir besoin de culture hôtes bien identifiées pour s'y nourrir et compléter leur cycle biologique, et sont alors appelés parasites obligatoires. Les nématodes phyto-parasites peuvent aussi se passer de la présence de cultures hôtes pour compléter leur cycle biologique et sont alors appelés parasites facultatifs. Dans les deux cas, ils causent des dégâts importants aux productions végétales. D'ailleurs, il est reconnu que les nématodes phyto-parasites réduisent la production agricole mondiale d'approximativement 11%, soit une perte de récolte de plusieurs millions de tonnes chaque année, correspondant à un coût économique estimé à l'échelle mondiale à 100 milliards de dollars par an.

Les nématodes ont une répartition mondiale et sont présents dans les couches superficielles du sol. Ils sont adaptés à tout type de milieu : eau salée, eau douce, des régions polaires aux régions tropicales. Ils constituent le groupe animal le plus nombreux et le plus répandu dans le sol. Leurs larves peuvent rester vivantes des dizaines d'années sous forme de kystes.

Les moyens de lutte contre ces phytopathogènes sont multiples mais parfois difficiles à mettre en place ou partiellement efficaces. Outre les nématicides chimiques (comme la fumigation chimique), les techniques de traitement physique (solarisation) et le respect de pratiques agricoles, voire le recours à certains biofumigants, de nouvelles méthodes de lutte peuvent être : l'apport au sol d'organismes biologiques prédateurs naturels des nématodes, l'amélioration génétique des plantes pour les rendre résistantes à ces pathogènes ou la stimulation naturelle des défenses des plantes par des éliciteurs, ou encore l'utilisation de bio-nématicides ou d'extraits naturels ayant des propriétés nématostatiques.

Les produits de fumigation sont les moyens traditionnels de contrôle des nématodes notamment en USA, France, Japon, Italie et Espagne et représentent 45% des ventes de nématicides. Cependant, ils sont onéreux et limités de ce fait aux cultures de haute valeur.

Les nématicides chimiques ont représenté en 2011, 55% des ventes totales et sont les plus utilisés au Brésil, UK, Mexique, Afrique du Sud, Chine et Argentine. Ces produits sont souvent toxiques et ont pour inconvénient d'être des biocides à large spectre, ce qui a souvent un impact sur l'ensemble de l'écosystème présent, éliminant toute forme de vie dans les cultures.

En Europe, les cultures les plus concernées par l'infestation par les nématodes sont les grandes cultures (betteraves, maïs, blé dur et colza), les cultures légumières (carotte, pomme de terre, solanacées, cucurbitacées, laitues) et les cultures pérennes telle que la vigne.

Pour des raisons environnementales et sanitaires, la quasi-totalité des nématicides les plus efficaces sont/seront retirés du marché, laissant les filières avec peu de solutions.

Ghareeb Rehab Y. et al. ; « The nematicidal potentiality of some algal extracts and their role in enhencement the tomato defence genes against root knot-nematodes », Egyptian Journal of Biological Pest Control, vol 29, n°1 (2019) décrit l'utilisation d'un extrait d'algue rouge comme agent nématicide pour protéger les plantes vis-à-vis des nématodes, en particulier l'effet nématicide des trois extraits d'algues marines suivants : Ulva fasciata Delile (algue verte), Corallina mediterranea et Corallina officinalis (algues rouges).

Maestrini Michela et al. ; « Evaluation of the anthelmintic properties of a traditional remedy based on a mixture of red algae using an in vitro assay on gastrointestinal nematodes of donkeys » Open Journal of Chemistry, vol. 4, no. 1, (2021) porte sur les propriétés vermifugeantes (« anthelmintic properties ») d'un mélange d'algue rouge à l'encontre de nématodes gastro-intestinaux présents chez les ânes. Ce document ne décrit pas une application sur les plantes.

Dans ce contexte, il existe un besoin de développer des méthodes alternatives pour protéger les cultures contre les nématodes phyto-parasitaires.

### Résumé de l'invention

Ainsi, la présente invention, qui trouve application dans le domaine agro-écologique et agricole, vise à proposer une nouvelle utilisation d'un extrait d'algue rouge comme agent nématostatique vis-à-vis des nématodes et/ou comme agent nématicide vis-à-vis des nématodes.

Selon un premier aspect, l'invention concerne une utilisation d'un extrait d'algue rouge comme agent nématostatique vis-à-vis des nématodes et/ou comme agent nématicide vis-à-vis des nématodes, caractérisée en ce que l'algue rouge est choisie parmi *Porphyra spp, Porphyra columbina, Porphyra acanthophora, Porphyra tenera, Porphyra perforata, Porphyra vietnamensis, Porphyra rosengurttii, Porphyra yezoensis, Porphyra haitanensis,* et dans laquelle l'utilisation n'est pas destinée au traitement thérapeutique de l'animal ou l'être humain.

Selon un deuxième aspect, l'invention concerne un procédé de traitement d'un sol destiné à favoriser la croissance d'une plante en réduisant l'accès des nématodes aux racines de ladite plante et/ou en éliminant les nématodes présents dans ledit sol, ledit procédé comprenant l'apport audit sol d'un extrait d'algue rouge, caractérisé en ce que l'algue rouge est choisie parmi *Porphyra spp, Porphyra columbina, Porphyra acanthophora, Porphyra tenera, Porphyra perforata, Porphyra vietnamensis, Porphyra rosengurttii, Porphyra yezoensis, Porphyra haitanensis.*

### Description détaillée

### Définitions

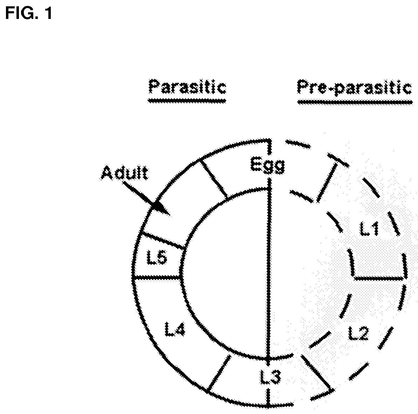

Le terme « nématode » englobe à la fois les larves de nématodes et les nématodes adultes. Les larves de nématodes correspondent aux stades de développement larvaires L1, L2, L3, et/ou L4. Les stades de développement L2 et L3 sont connus pour être les phases mobiles et infectieuses des larves de nématodes. Les nématodes adultes correspondent au stade immature et au stade mature. Les différents stades de développement des nématodes sont décrits en Figure 1, le stade L5 correspondant au premier stade du nématode adulte. Dans le cadre de la présente invention, les nématodes sont avantageusement des larves de nématodes, de préférence des larves de nématodes au stade L2 et/ou L3. Les nématodes sont de préférence des nématodes pathogènes, notamment des nématodes pathogènes vis-à-vis des plantes (aussi appelé phytoparasites) par exemple choisis parmi les familles des Anguinidae (par exemple du genre Ditylenchus), des Longidoridae (par exemple choisi parmi les genres Xiphinema, Longidorus), des Tylenchulidae (par exemple du genre Paratylenchus), des Pratylenchidae (par exemple choisi parmi les genres Pratylenchus, Radopholus, Pratylenchoides, Noccobus), des Hoplolaimidae (par exemple du genre Rotylenchus), des Tylenchulidae (par exemple du genre Tylenchulus), des Trichodoridae (par exemple du genre Paratrichodorus), des Heterodoridae (par exemple choisi parmi les genres Globodera, Heterodera), et des Meloidogynidae (par exemple du genre Meloidogyne).

Le terme « agent nématostatique » ou « composition nématostatique » désigne un agent ou une composition qui immobilise le nématode temporairement. L'immobilisation du nématode peut durer au moins un jour, par exemple au moins deux jours, au moins trois jours, au moins quatre jours, au moins cinq jours, au moins six jours, au moins sept jours. Cette immobilisation a pour effet d'empêcher les nématodes de se diriger vers une plante hôte et de l'infecter pendant la période d'immobilisation.

Le terme « agent nématicide » ou « composition nématicide » désigne un agent ou une composition qui immobilise de manière irréversible un nématode. Cette immobilisation irréversible peut entrainer la mort du nématode.

Le terme « algue rouge » désigne une algue rouge vivant en milieu aquatique, et plus précisément dans les mers et océans, pouvant être utilisée dans l'agriculture, l'alimentation et l'industrie en général. Les algues rouges appartiennent au groupe des *Rhodophytae.* En particulier, l'algue rouge peut être choisie parmi le genre *Palmaria,* le genre *Porphyra,* ou le genre *Chondrus,* de préférence le genre *Porphyra* et/ou *Palmaria spp.* Selon un mode de réalisation préféré de l'invention, l'algue rouge est choisie parmi *Porphyra spp, Porphyra columbina, Porphyra acanthophora, Porphyra tenera* (aussi appelé *Pyropia tenera), Porphyra perforata, Porphyra vietnamensis, Porphyra rosengurttii, Porphyra yezoensis* (aussi appelé *Pyropia yezoensis*)*, Porphyra haitanensis,* encore plus préférentiellement *Porphyra spp* ou *Porphyra columbina.*

Le terme « extrait d'algue rouge » désigne le produit résultant de l'extraction du contenu des cellules d'une algue rouge. L'extrait d'algue rouge peut être obtenu par un procédé comportant les étapes suivantes : mélange de l'algue rouge fraiche ou sèche, de préférence broyée, avec de l'eau, extraction (séparation solide-liquide) et éventuellement fractionnement et/ou concentration. L'algue rouge peut être facilement récoltée selon les méthodes classiques décrites dans la littérature. L'algue rouge sèche contient généralement moins de 5% d'eau, de préférence moins de 3% d'eau, en masse par rapport à la masse totale d'algue. L'extrait d'algue rouge est avantageusement obtenu par extraction avec un solvant aqueux ou un solvant organique, par exemple par extraction aqueuse à un pH acide. L'extrait d'algue rouge peut être sous forme sèche ou sous forme liquide, de préférence sous forme liquide. Ainsi, l'eau de l'extrait d'algue rouge peut être éliminée afin d'obtenir un extrait d'algue rouge plus ou moins sec ou liquide, par exemple contenant au moins 10% de matière sèche en masse par rapport à la masse totale de l'extrait d'algue rouge, par exemple au moins 20% de matière sèche, au moins 30% de matière sèche, au moins 40% de matière sèche, au moins 50% de matière sèche, au moins 60% de matière sèche, au moins 70% de matières sèche, au moins 80% de matière sèche, au moins 90% de matière sèche, au moins 95% de matière sèche, de préférence entre 1 et 15% de matière sèche, par exemple 8% de matière sèche. L'extrait peut éventuellement être ultra-filtré afin d'obtenir une fraction présentant une activité nématostatique et/ou nématicide améliorée par rapport à l'extrait d'algue rouge non ultra-filtré.

Le terme « fertilisant » désigne une substance, ou un mélange de substances, naturelle ou d'origine synthétique, utilisée en agriculture, en horticulture et sylviculture, pour améliorer les sols, notamment leur structure, et fertiliser les plantes cultivées. Les fertilisants comprennent les engrais et les amendements.

Le terme « engrais » désigne des matières fertilisantes dont la fonction principale est d'apporter aux plantes des éléments directement utiles à leur nutrition (éléments fertilisants majeurs, éléments fertilisants secondaires et oligo-éléments).

Le terme « amendement » désigne une substance destinée à améliorer la qualité des sols, et notamment destinée à améliorer le pH des sols. Avantageusement, l'amendement est choisi parmi les amendements minéraux basiques de type calcaire et/ou calcaires et magnésiens ; les amendements humifères de type composts ou les fumiers.

Par l'expression « plante » on entend désigner dans la présente demande la plante considérée dans son ensemble, incluant son appareil racinaire, son appareil végétatif, les graines, semences et fruits.

L'effet nématostatique peut être mesuré à l'aide d'un test de « passage actif » qui permet de mesurer en conditions *in vitro,* la capacité d'un nématode à être immobilisé de manière temporaire par un agent ou une composition, puis à recouvrer sa mobilité au bout d'un temps déterminé. Un test de « passage actif » qui peut être mis en œuvre dans le cadre de la présente invention est détaillé à l'Exemple 2. L'effet nématostatique peut également être mesuré de manière indirecte en mesurant la perturbation du cycle infectieux des nématodes liée à l'immobilisation des nématodes, notamment en déterminant l'indice de galles (par exemple suite à une infestation par des nématodes à galle du gendre *Meloidogyne*)*,* ou encore en déterminant le rapport Pf/Pi (avec Pf correspondant au nombre de kyste présent dans ladite parcelle à un instant t_{f}, par exemple à la fin de la saison culturale et, Pi correspondant au nombre de kystes de nématode présent dans une parcelle à instant tᵢ, par exemple au début de la saison culturale). Un test permettant de déterminer le rapport Pi/Pf est détaillé à l'Exemple 6.

Ainsi, dans le cadre de la présente invention, une quantité efficace pour avoir un effet nématostatique correspond à une quantité permettant (i) d'immobiliser de manière temporaire au moins 10% des nématodes, avantageusement au moins 20%, par exemple au moins 30%, au moins 40%, au moins 50%, au moins 60%, au moins 70%, au moins 80%, au moins 90% ou 100% des nématodes dans un test de « passage actif », (ii) de diminuer l'indice de galles d'au moins 10%, avantageusement d'au moins 20%, par exemple d'au moins 30%, d'au moins 50% ou d'au moins 70%, ou (iii) d'obtenir un rapport Pf/Pi inférieur ou égal à 1, de préférence inférieur à 0,8, inférieur à 0,6, inférieur à 0,4, ou encore inférieur à 0,2.

L'effet nématicide peut être mesuré avec les mêmes méthodes de mesure que celles énumérées pour l'effet nématostatique. Ainsi, dans le cadre de la présente invention, une quantité efficace pour avoir un effet nématicide permet (i) d'immobiliser de manière irréversible au moins 10 % des nématodes , avantageusement au moins 20%, par exemple au moins 30%, au moins 40%, au moins 50%, au moins 60%, au moins 70%%, au moins 80%, au moins 90% ou 100% des nématodes dans un test de « passage actif », (ii) de diminuer l'indice de galles d'au moins 10%, avantageusement d'au moins 20%, par exemple d'au moins 30%, d'au moins 50% ou d'au moins 70%, ou (iii) d'obtenir un rapport Pf/Pi inférieur ou égal à 1, de préférence inférieur à 0,8, inférieur à 0,6, inférieur à 0,4, ou encore inférieur à 0,2.

La présente invention découle des avantages surprenants mis en évidence par les inventeurs de l'effet d'un extrait d'algue rouge comme agent nématostatique vis-à-vis des nématodes et/ou comme agent nématicide vis-à-vis des nématodes.

### Composition utilisée dans le cadre de l'invention

La présente demande décrit la composition nématostatique et/ou nématicide comprenant un extrait d'algue rouge, ledit extrait ayant été obtenu par extraction aqueuse à un pH acide, qui est utilisée dans le cadre de l'invention.

L'extrait d'algue rouge peut être obtenu par extraction aqueuse à un pH acide, par exemple à un pH compris entre 1 et 7, de préférence entre 2 et 6, encore plus préférentiellement entre 2 et 5, par exemple un pH allant de 2,5 à 5,5, un pH allant de 3 à 4,5, par exemple un pH égal à 2,5 +/-0,1. Le pH est mesuré à l'aide d'une sonde pHmétrique. L'extraction aqueuse à pH acide est possible avec un solvant aqueux auquel une solution d'acide, de préférence une solution d'acide fort, est ajoutée. La solution d'acide permet d'ajuster le pH lors de l'extraction au pH souhaité. Par exemple, l'acide est choisi parmi l'acide sulfurique (H₂SO₄), l'acide citrique, l'acide acétique, préférentiellement l'acide sulfurique. La quantité d'acide utilisée lors de l'extraction sera facilement ajustée en fonction du pH final souhaité.

Lorsqu'un solvant acide est utilisé pour obtenir l'extrait d'algue rouge, tout ou partie dudit solvant acide est avantageusement éliminé avant l'utilisation de l'extrait d'algue rouge comme agent nématostatique et/ou nématicide. Par exemple, le solvant acide peut être éliminé par évaporation. Ainsi, avantageusement, l'extrait d'algue rouge utilisé dans le cadre de la présente invention est dépourvu de solvant acide.

Indépendamment de l'utilisation d'un solvant acide lors de la préparation de l'extrait, l'extrait d'algue rouge est de préférence dépourvu d'acide autre que les acides naturellement présents dans l'algue rouge utilisée pour préparer l'extrait d'algue rouge. Dans ce cas, la composition est dépourvue d'acide autre que les acides naturellement présents dans l'algue rouge utilisée pour préparer l'extrait d'algue rouge.

En particulier, la composition est dépourvue d'acide carboxylique, de préférence l'extrait est dépourvu d'acide carboxylique choisi parmi l'acide formique, l'acide acétique, l'acide lactique, l'acide citrique, l'acide oxalique, l'acide propionique, l'acide malique, l'acide tartrique, l'acide fumarique, l'acide gluconique, l'acide sorbique et l'acide butyrique. Dans un mode de réalisation particulier, la composition est dépourvue d'acide formique.

De plus, l'extrait d'algue rouge est avantageusement obtenu par extraction aqueuse à une température comprise allant de 10 à 50°C, préférentiellement allant de 20 à 50°C, par exemple à une température allant de 15 à 45 °C, par exemple à 25°C, 30°C, 35°C, ou à 40°C.

L'extrait d'algue rouge peut être obtenu en mélangeant des algues rouges broyées avec un solvant aqueux acide à une température allant de 20 à 50°C, de préférence de 40°C, et à un pH allant de 3 à 4,5, de préférence un pH de 2,5.

Par exemple, l'extrait d'algue rouge est obtenu en mélangeant des algues rouges séchées et broyées avec de l'eau à une température de 40 °C pendant 3 heures, puis en ajoutant de l'acide sulfurique afin que le pH du mélange soit acide, par exemple à pH 2,5, puis en centrifugeant le mélange pour éliminer la fraction solide et récupérer la fraction liquide. La fraction liquide peut être utilisée en tant que telle comme extrait d'algue rouge ou peut subir un ou plusieurs traitements ultérieurs, comme par exemple une filtration et/ou une précipitation.

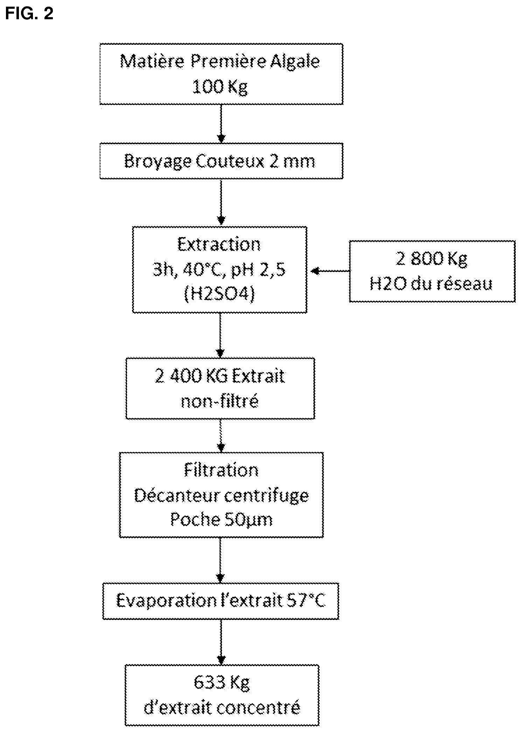

L'extrait d'algue rouge peut être obtenu par la mise en œuvre du procédé décrit dans l'Exemple 1, notamment Exemple 1A et Exemple 1B (Figure 2).

La composition peut être sous forme liquide ou solide.

Lorsqu'elle est sous forme solide, la composition peut être sous forme de poudre ou de granule, avantageusement sous forme de granule. La préparation d'une telle composition pourra être réalisée en utilisant les connaissances générales de la personne du métier.

La composition comprend une quantité suffisante d'extrait d'algue rouge pour avoir un effet nématostatique vis-vis des nématodes et/ou nématicide vis-vis des nématodes, lorsqu'elle est appliquée au sol. La composition peut comprendre une quantité d'extrait d'algue rouge inférieure à 50% en poids, inférieure à 40%, inférieure à 30%, inférieure à 20%, inférieure à 10%, par exemple allant de 2 à 10 % en poids, préférentiellement allant de 5 à 7 % en poids, par rapport au poids total de la composition.

La composition peut comprendre en outre au moins un fertilisant, de préférence choisi parmi un amendement ou un engrais. De telles compositions permettent de répondre au mieux aux besoins de croissance de la plante qui s'exprimera notamment en termes d'amélioration du développement de la plante et du rendement.

A titre d'exemples de fertilisants pouvant être utilisés dans la composition, on citera les amendements calcaires, les amendements organiques et les supports de culture, les engrais racinaires de type NP, PK, NPK, etc. ou encore les solutions nutritives racinaires.

L'engrais peut être une ou plusieurs substances choisies parmi l'urée, le sulfate d'ammonium, le nitrate d'ammonium, le phosphate, les sels de phosphate, le chlorure de potassium, le nitrate de magnésium, le nitrate de manganèse, le nitrate de zinc, le nitrate de cuivre, l'acide phosphorique, le nitrate de potassium, le sulfate de potassium, le sulfate de calcium, le chlorure de calcium et l'acide borique.

Le fertilisant peut être sous forme solide ou sous liquide.

La composition nématostatique et/ou nématicide permet de protéger la plante contre les nématodes. Cette protection permet d'améliorer la santé de la plante, répondant ainsi aux besoins de croissance de la culture qui s'exprimera notamment en termes d'amélioration de rendement et de la qualité de la récolte. Par exemple, l'amélioration de rendement et de la qualité de récolte peut s'exprimer par une amélioration de la biomasse végétale produite par la plante et/ou encore une amélioration de la qualité visuelle de la plante. Ainsi, la croissance de la plante peut être augmentée et/ou l'activité photosynthétique de la plante peut être favorisée (notamment en augmentant la teneur en chlorophylle foliaire). La composition permet également de limiter, jusqu'à supprimer, l'utilisation de pesticides.

La composition peut être apportée au sol dans le cadre d'un procédé de traitement d'un sol destiné à favoriser la croissance d'une plante en réduisant l'accès des nématodes aux racines de ladite plante ou en éliminant les nématodes présents dans ledit sol.

### Utilisation

L'invention concerne une utilisation d'un extrait d'algue rouge comme agent nématostatique vis-à vis des nématodes et/ou comme agent nématicide vis-à-vis des nématodes, caractérisée en ce que l'algue rouge est choisie parmi *Porphyra spp, Porphyra columbina, Porphyra acanthophora, Porphyra tenera, Porphyra perforata, Porphyra vietnamensis, Porphyra rosengurttii, Porphyra yezoensis, Porphyra haitanensis,* et dans laquelle l'utilisation n'est pas destinée à l'animal ou à l'être humain. L'invention trouvant application dans le domaine agro-écologique et agricole, les nématodes sont présents dans un sol.

De préférence, l'extrait d'algue rouge est obtenu par extraction aqueuse à un pH acide, par exemple à un pH compris entre 1 et 7, de préférence entre 2 et 6, encore plus préférentiellement entre 2 et 5, par exemple un pH allant de 2,5 à 5,5, un pH allant de 3 à 4,5, par exemple un pH égal à 2,5 +/-0,1. Le pH est mesuré à l'aide de sonde pHmétrique. L'extraction aqueuse à pH acide est possible avec un solvant acide. Le solvant acide permet d'ajuster le pH lors de l'extraction au pH souhaité. Par exemple, l'acide est choisi parmi l'acide sulfurique (H₂SO₄), l'acide citrique, l'acide acétique, préférentiellement l'acide sulfurique. La quantité d'acide utilisé lors de l'extraction sera facilement ajustée en fonction du pH final souhaité.

De plus, l'extrait d'algue rouge est avantageusement obtenu par extraction aqueuse à une température comprise allant de 10 à 50°C, préférentiellement allant de 20 à 50°C, par exemple à une température allant de 15 à 45 °C, par exemple à 25°C, 30°C, 35°C, ou à 40°C.

Lorsqu'un solvant acide est utilisé pour obtenir l'extrait d'algue rouge, tout ou partie dudit solvant acide est avantageusement éliminé avant l'utilisation de l'extrait d'algue rouge comme agent nématostatique et/ou nématicide. Par exemple, le solvant acide peut être éliminé par évaporation. Ainsi, avantageusement, l'extrait d'algue rouge utilisé dans le cadre de la présente invention est dépourvu de solvant acide.

Indépendamment de l'utilisation d'un solvant acide lors de la préparation de l'extrait, l'extrait d'algue rouge utilisé dans le cadre de la présente invention est de préférence dépourvu d'acide autre que les acides naturellement présents dans l'algue rouge utilisée pour préparer l'extrait d'algue rouge. En particulier, l'extrait d'algue rouge utilisé dans le cadre de la présente invention est dépourvu d'acide carboxylique, de préférence l'extrait est dépourvu d'acide carboxylique choisi parmi l'acide formique, l'acide acétique, l'acide lactique, l'acide citrique, l'acide oxalique, l'acide propionique, l'acide malique, l'acide tartrique, l'acide fumarique, l'acide gluconique, l'acide sorbique et l'acide butyrique. Dans un mode de réalisation particulier, l'extrait d'algue rouge utilisé dans le cadre de la présente invention est dépourvu d'acide formique.

Selon un mode de réalisation préféré, l'extrait d'algue rouge est obtenu en mélangeant des algues rouges broyées avec un solvant aqueux acide à une température allant de 20 à 50°C, de préférence de 40°C, et à un pH allant de 3 à 4,5, de préférence un pH de 2,5.

Par exemple, l'extrait d'algue rouge est obtenu en mélangeant des algues rouges séchées et broyées avec de l'eau à une température de 40 °C pendant 3 heures, puis en ajoutant de l'acide sulfurique afin que le pH du mélange soit acide, par exemple à pH 2,5, puis en centrifugeant le mélange pour éliminer la fraction solides et récupérer la fraction liquide. La fraction liquide peut être utilisée en tant que telle comme extrait d'algue rouge ou peut subir un ou plusieurs traitements ultérieurs, comme par exemple une filtration et/ou une précipitation.

L'utilisation de l'extrait d'algue rouge comme agent nématostatique et/ou nématicide permet de protéger la plante contre les nématodes. Cette protection permet d'améliorer la santé de la plante, répondant ainsi aux besoins de croissance de la culture qui s'exprimera notamment en termes d'amélioration de rendement et de la qualité de la récolte. Par exemple, l'amélioration de rendement et de la qualité de récolte peut s'exprimer par une amélioration de la biomasse végétale produite par la plante et/ou encore une amélioration de la qualité visuelle de la plante. Ainsi, la croissance de la plante peut être augmentée et/ou l'activité photosynthétique de la plante peut être favorisée (notamment en augmentant la teneur en chlorophylle foliaire). L'utilisation de l'extrait d'algue rouge permet également de limiter, jusqu'à supprimer, l'utilisation de pesticides.

Avantageusement, l'extrait d'algue rouge est apporté au sol au stade du semis, au stade de pré-émergence de la plante et/ou au stade de post-émergence de la plante.

L'extrait d'algue rouge peut être apporté au sol en des quantités variables selon les besoins de la plante traitée, par exemple en une quantité allant de 1 à 50 kg/ha, de préférence allant de 1 à 10 kg/ha, de préférence environ 5 kg/ha.

La présente invention trouve application dans le traitement d'une très grande variété de plantes.

Parmi les plantes traitées, on citera en particulier :
(i) les dicotylédones telles que les Solanacées (ex. tabac, tomates, pommes de terre, aubergines, etc...), les chenopodiacées (ex. betteraves à sucre, etc...), les fabacées (ex. soja, pois, luzerne etc...), les cucurbitacées (ex. melon, pastèque, concombre, courges, etc...), les crucifères ou brassicacées (ex. colza, moutarde, etc...), les composées (ex. chicorée, etc...), les Ombellifères (ex. carottes, cumin etc...), les malvacées (ex. cotonnier, caco, okra, etc...), les lamiacées (lavande, etc.) et les rosacées en particulier arbres et arbustes dont les fruits ont une importance économique ; et
(ii) les monocotylédones telles que par exemple les céréales (ex. blé, orge, avoine, riz, maïs, etc...) et les Liliacées (ex. oignon, ail, etc...).

Avantageusement, la plante appartient à l'ordre des monocotylédones, telle que la famille des poacées. Les poacées, communément appelés les graminées, renferment notamment la plupart des espèces appelées communément « herbes » et « céréales ». Les céréales sont largement cultivées, principalement pour leurs grains, et sont utilisées dans l'alimentation humaine et animale.

Lorsque la plante est une poacée, elle est de préférence choisie parmi le blé, le riz, l'orge, l'avoine, le seigle, la canne à sucre, la prairie, ou le maïs, de préférence le maïs.

La plante est de préférence choisie parmi le soja, la betterave, le maïs, le blé dur, le colza, la carotte, la pomme de terre, les solanacées, les cucurbitacées, la laitue ou la vigne, de préférence la pomme de terre.

Selon un mode particulier de l'invention, l'utilisation ne comprend pas l'apport audit sol d'un acide autre que les acides naturellement présents dans l'algue rouge utilisée pour préparer l'extrait d'algue rouge. De préférence, l'utilisation ne comprend pas l'apport audit sol d'un acide carboxylique, par exemple un acide carboxylique choisi parmi l'acide formique, l'acide acétique, l'acide lactique, l'acide citrique, l'acide oxalique, l'acide propionique, l'acide malique, l'acide tartrique, l'acide fumarique, l'acide gluconique, l'acide sorbique et l'acide butyrique.

### Procédé

L'invention concerne également un procédé de traitement d'un sol destiné à favoriser la croissance d'une plante en réduisant l'accès des nématodes aux racines de ladite plante et/ou en éliminant les nématodes présents dans ledit sol, ledit procédé comprenant l'apport audit sol d'un extrait d'algue rouge, caractérisé en ce que l'algue rouge est choisie parmi *Porphyra spp, Porphyra columbina, Porphyra acanthophora, Porphyra tenera, Porphyra perforata, Porphyra vietnamensis, Porphyra rosengurttii, Porphyra yezoensis, Porphyra haitanensis.* Les caractéristiques de l'extrait d'algue rouge tels que décrits ci-dessus, notamment dans la partie « composition » et « utilisation », sont applicables au procédé selon l'invention.

Les caractéristiques de la composition tels que décrits ci-dessus, notamment dans la partie « composition » sont applicables au procédé selon l'invention.

L'extrait d'algue rouge ou la composition est apporté(e) au sol en une quantité suffisante pour réduire l'accès des nématodes aux racines de ladite plante, de préférence pour immobiliser les nématodes présents dans le sol de façon réversible ou pour repousser les nématodes des racines de ladite plante. L'extrait d'algue rouge ou la composition est apporté(e) au sol en une quantité suffisante pour éliminer les nématodes présents dans ledit sol, de préférence pour immobiliser les nématodes présents dans le sol de façon irréversible. Par exemple, l'extrait d'algue rouge ou la composition est apporté(e) au sol dans une quantité suffisante pour avoir un effet nématostatique et/ou nématicide d'au moins 10%, avantageusement d'au moins 20%, par exemple d'au moins 30%, au moins 40%, au moins 50%, au moins 60%, au moins 70%, au moins 80%, au moins 90% ou 100%. Ainsi, dans le cadre de la présente invention, une quantité efficace pour avoir un effet nématostatique permet :
(i) d'immobiliser au moins 10 % des nématodes, avantageusement au moins 20%, par exemple au moins 30%, au moins 40%, au moins 50%, au moins 60%, au moins 70%, au moins 80%, au moins 90% ou 100% des nématodes dans un test de « passage actif ».
(ii) de diminuer l'indice de galles d'au moins 10%, avantageusement d'au moins 20%, par exemple d'au moins 30%, d'au moins 50% ou d'au moins 70%, ou
(iii) d'obtenir un rapport Pf/Pi inférieur ou égal à 1, de préférence inférieur à 0,8, inférieur à 0,6, inférieur à 0,4, ou encore inférieur à 0,2.

Ainsi, dans le cadre de la présente invention, une quantité efficace pour avoir un effet nématicide permet :
(i) d'immobiliser de façon irréversible au moins 10 % des nématodes, avantageusement au moins 20%, par exemple au moins 30%, au moins 40%, au moins 50%, au moins 60%, au moins 70%, au moins 80%, au moins 90% ou 100% des nématodes dans un test de « passage actif ».
(ii) de diminuer l'indice de galles d'au moins 10%, avantageusement d'au moins 20%, par exemple d'au moins 30%, d'au moins 50% ou d'au moins 70%, ou
(iii) d'obtenir un rapport Pf/Pi inférieur ou égal à 1, de préférence inférieur à 0,8, inférieur à 0,6, inférieur à 0,4, ou encore inférieur à 0,2.

Le procédé de l'invention permet de protéger la plante contre les nématodes. Cette protection permet d'améliorer la santé de la plante, répondant ainsi aux besoins de croissance de la culture qui s'exprimera notamment en termes d'amélioration de rendement et de la qualité de la récolte. Par exemple, l'amélioration de rendement et de la qualité de récolte peut s'exprimer par une amélioration de la biomasse végétale produite par la plante et/ou encore une amélioration de la qualité visuelle de la plante. Ainsi, la croissance de la plante peut être augmentée et/ou l'activité photosynthétique de la plante peut être favorisée (notamment en augmentant la teneur en chlorophylle foliaire). La composition permet également de limiter, jusqu'à supprimer, l'utilisation de pesticides.

Avantageusement, l'extrait d'algue rouge est apporté au sol au stade du semis, au stade de pré-émergence de la plante et/ou au stade de post-émergence de la plante.

L'extrait d'algue rouge peut être apporté au sol en des quantités variables selon les besoins de la plante traitée, par exemple en une quantité allant de 1 à 50 kg/ha, de préférence allant de 1 à 10 kg/ha, de préférence environ 5 kg/ha.

La présente invention trouve application dans le traitement d'une très grande variété de plantes.

Parmi les plantes traitées, on citera en particulier :
(i) les dicotylédones telles que les Solanacées (ex. tabac, tomates, pommes de terre, aubergines, etc...), les chenopodiacées (ex. betteraves à sucre, etc...), les fabacées (ex. soja, pois, luzerne etc...), les cucurbitacées (ex. melon, pastèque, concombre, courges, etc...), les crucifères ou brassicacées (ex. colza, moutarde, etc...), les composées (ex. chicorée, etc...), les Ombellifères (ex. carottes, cumin etc...), les malvacées (ex. cotonnier, caco, okra, etc...), les lamiacées (lavande, etc.) et les rosacées en particulier arbres et arbustes dont les fruits ont une importance économique ; et
(ii) les monocotylédones telles que par exemple les céréales (ex. blé, orge, avoine, riz, maïs, etc...) et les Liliacées (ex. oignon, ail, etc...).

Avantageusement, la plante appartient à l'ordre des monocotylédones, telle que la famille des poacées. Les poacées, communément appelés les graminées, renferment notamment la plupart des espèces appelées communément « herbes » et « céréales ». Les céréales sont largement cultivées, principalement pour leurs grains, et sont utilisées dans l'alimentation humaine et animale.

Lorsque la plante est une poacée, elle est de préférence choisie parmi le blé, le riz, l'orge, l'avoine, le seigle, la canne à sucre, la prairie, ou le maïs, de préférence le maïs.

La plante est de préférence choisie parmi le soja, la betterave, le maïs, le blé dur, le colza, la carotte, la pomme de terre, les solanacées, les cucurbitacées, la laitue ou la vigne, de préférence la pomme de terre.

Selon un mode particulier de l'invention, le procédé ne comprend pas l'apport audit sol d'un acide autre que les acides naturellement présents dans l'algue rouge utilisée pour préparer l'extrait d'algue rouge. De préférence, le procédé ne comprend pas l'apport audit sol d'un acide carboxylique, par exemple un acide carboxylique choisi parmi l'acide formique, l'acide acétique, l'acide lactique, l'acide citrique, l'acide oxalique, l'acide propionique, l'acide malique, l'acide tartrique, l'acide fumarique, l'acide gluconique, l'acide sorbique et l'acide butyrique.

### Brève description des dessins

Figure 1 : La Figure 1 représente le cycle de développement d'un nématode. Le premier stade correspond à l'œuf, puis les stades de développement larvaires L1, L2, L3 et L4, et les deux stades de développement du nématode adulte (appelé L5 et adulte).
Figure 2 : La Figure 2 représente un schéma de préparation d'un extrait d'algue rouge de type *Porphyra spp.*

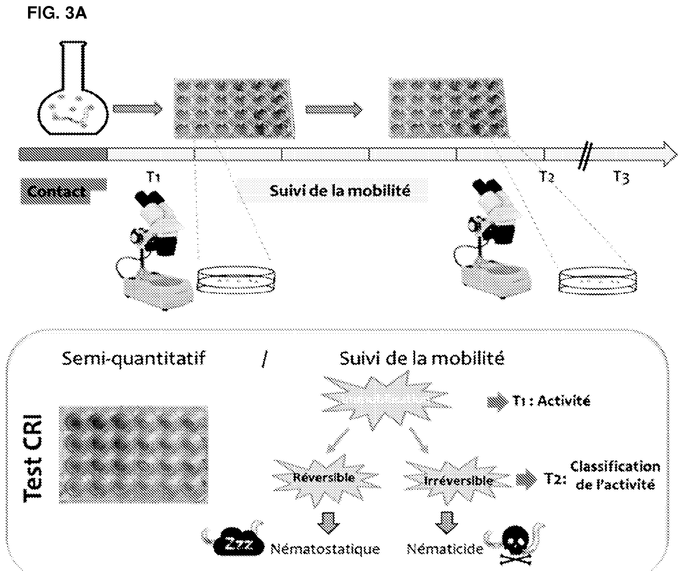

Figure 3A : La Figure 3A représente un dispositif expérimental de suivi de mobilité des nématodes appelé test d'immobilisation, afin de mesurer l'effet nématostatique et/ou nématicide d'un extrait d'algue rouge. Après mise en contact des nématodes avec un extrait d'algue rouge, les nématodes ont été transférés sur une membrane poreuse et leur mobilité a été suivie au cours du temps (T1, T2) afin de déterminer s'ils étaient immobilisés de façon réversible et/ou irréversible.

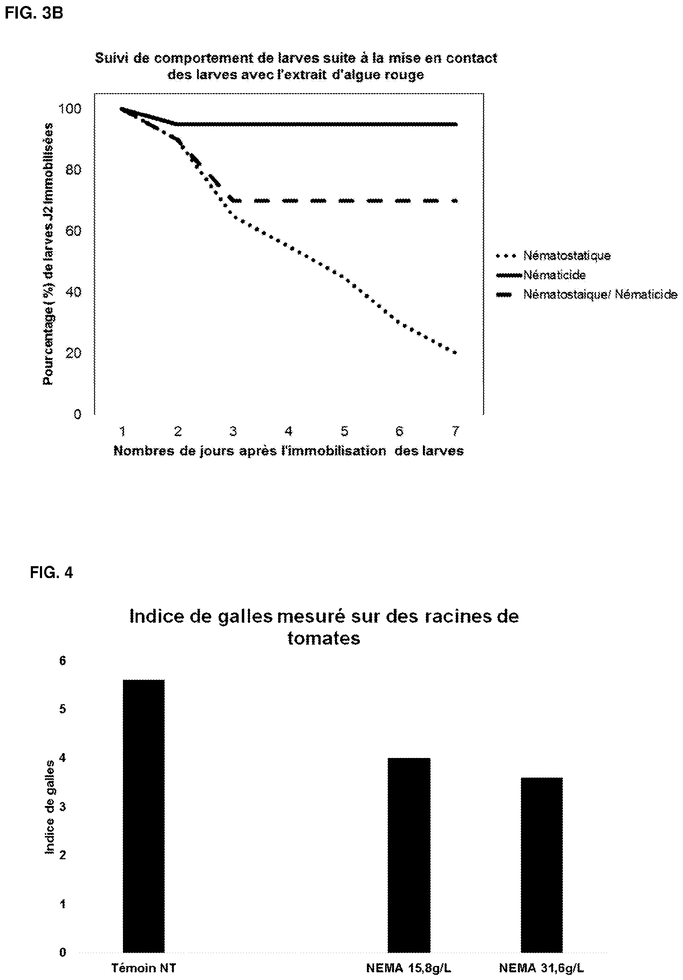

Figure 3B : La Figure 3B représente le suivi du comportement des larves de nématodes au cours du temps (en jour) suite à la mise en contact des larves avec un extrait d'algue rouge. Le comportement des larves de nématodes traduit une spécificité d'action de l'extrait vis-à-vis des différents groupes de nématodes. Le pourcentage de larves au stade L2 (ou J2) immobilisées est exprimé en fonction du nombre de jours après immobilisation des larves. Il a été observé trois comportements des larves au cours du temps (en jour): i) un effet nématostatique, lorsque les larves de nématodes ont recouvré leur mobilité au cours du temps ; (ii) un effet nématicide lorsque les larves de nématodes n'ont pas recouvré leur mobilité au cours du temps , et (iii) un effet nématostatique et un effet nématicide lorsqu'une première fraction de larves de nématodes n'a pas recouvré sa mobilité au bout de quelques jours et une seconde fraction des larves de nématodes a recouvré sa mobilité.
Figure 4 : La Figure 4 représente la mesure de l'indice de galles sur des racines de tomates à jar+30, après que des plants de tomates infectés par des larves au stade de développement L2 de type *Meloidogyne incognita* aient été traitées avec une solution d'extrait d'algue rouge de *Porphyra spp à* 15,8 g/L (NEMA 15,8 g/L), avec une solution d'extrait d'algue rouge de *Porphyra spp à* 31,6 g/L (NEMA 31,6 g/L) ou n'aient reçu aucun traitement (Témoin NT).

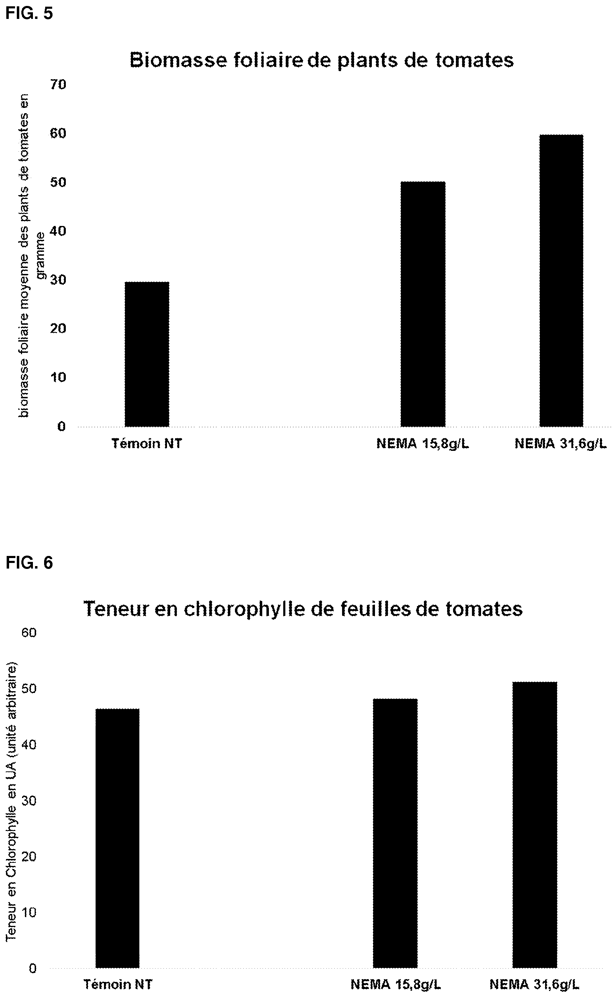

Figure 5 : La Figure 5 représente la biomasse foliaire moyenne en gramme des plants de tomates à jar+30, après que des plants de tomates infectés par des larves au stade de développement L2 de type *Meloidogyne incognita* aient été traitées avec une solution d'extrait d'algue rouge de *Porphyra spp à* 15,8 g/L (NEMA 15,8 g/L), avec une solution d'extrait d'algue rouge de *Porphyra spp à* 31,6 g/L (NEMA 31,6 g/L) ou n'aient reçu aucun traitement (Témoin NT).
Figure 6 : La Figure 6 représente la teneur en chlorophylle des tissus foliaires de tomate à jar+30, en Unité Arbitraire UA, après que des plants de tomates infectés par des larves au stade de développement L2 de type *Meloidogyne incognita* aient été traitées avec une solution d'extrait d'algue rouge de *Porphyra spp à* 15,8 g/L (NEMA 15,8 g/L), avec une solution d'extrait d'algue rouge de *Porphyra spp à* 31,6 g/L (NEMA 31,6 g/L) ou n'aient reçu aucun traitement (Témoin NT).

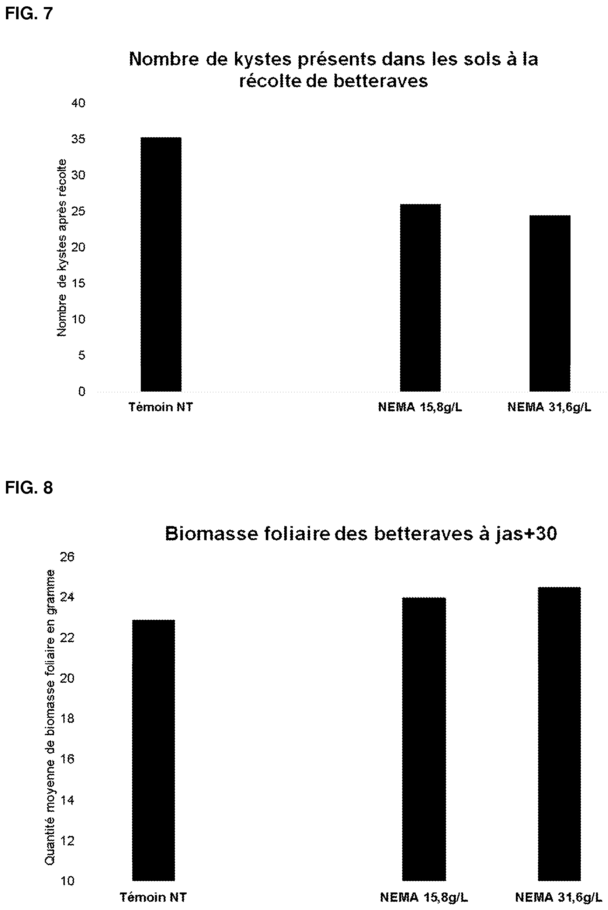

Figure 7 : La Figure 7 représente le nombre de kystes de *Heterodera schachtii* présents dans les sols lors de la récolte de betteraves à jar+36, après que des plants de betterave infectés par des larves au stade de développement L2 et des œufs issus de *Heterodera schachtii* aient été traitées avec une solution d'extrait d'algue rouge de *Porphyra spp à* 15,8 g/L (NEMA 15,8 g/L), avec une solution d'extrait d'algue rouge de *Porphyra spp à* 31,6 g/L (NEMA 31,6 g/L) ou n'aient reçu aucun traitement (Témoin NT).
Figure 8 : La Figure 8 représente la quantité de biomasse foliaire de betteraves à jar+36, après que des plants de betterave infectés par des larves au stade de développement L2 et des œufs issus de *Heterodera schachtii* aient été traitées avec une solution d'extrait d'algue rouge de *Porphyra spp à* 15,8 g/L (NEMA 15,8 g/L), avec une solution d'extrait d'algue rouge de *Porphyra spp à* 31,6 g/L (NEMA 31,6 g/L) ou n'aient reçu aucun traitement (Témoin NT).

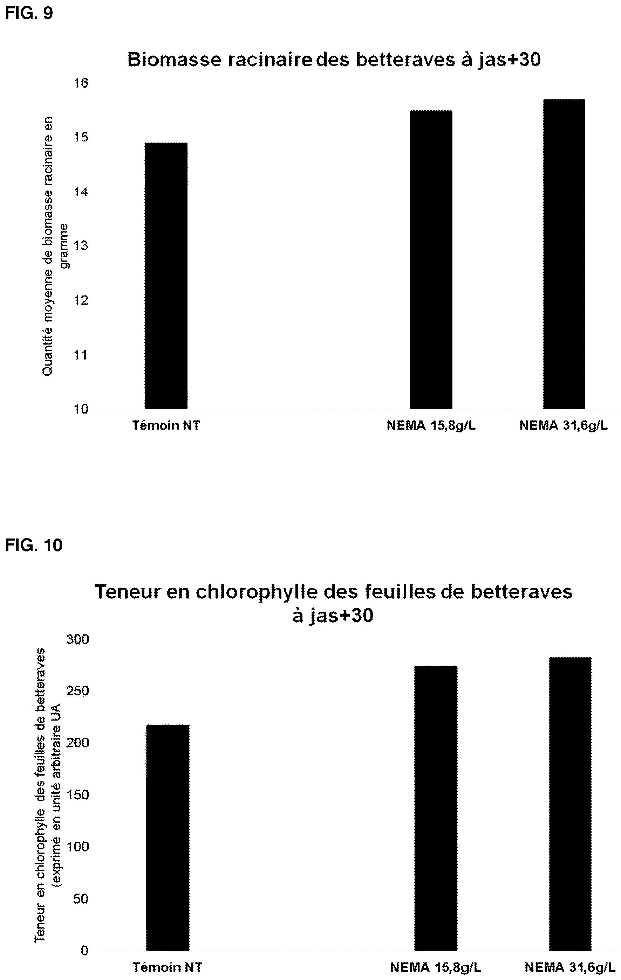

Figure 9 : La Figure 9 représente la quantité de biomasse racinaire de betteraves à jar+36, après que des plants de betterave infectés par des larves au stade de développement L2 et des œufs issus de *Heterodera schachtii* aient été traitées avec une solution d'extrait d'algue rouge de *Porphyra spp à* 15,8 g/L (NEMA 15,8 g/L), avec une solution d'extrait d'algue rouge de *Porphyra spp à* 31,6 g/L (NEMA 31,6 g/L) ou n'aient reçu aucun traitement (Témoin NT).
Figure 10 : La Figure 10 représente le contenu en chlorophylle des tissus foliaires de betterave à jar+36, après que des plants de betterave infectés par des larves au stade de développement L2 et des œufs issus de *Heterodera schachtii* aient été traitées avec une solution d'extrait d'algue rouge de *Porphyra spp à* 15,8 g/L (NEMA 15,8 g/L), avec une solution d'extrait d'algue rouge de *Porphyra spp à* 31,6 g/L (NEMA 31,6 g/L) ou n'aient reçu aucun traitement (Témoin NT).

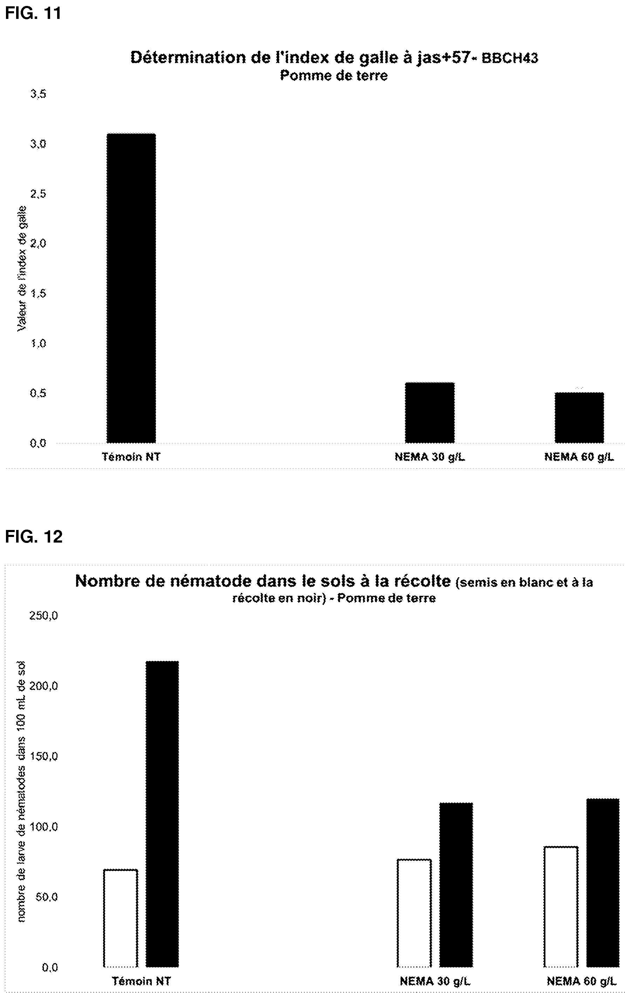

Figure 11 :La Figure 11 représente la mesure de l'indice de galles sur des plants de pommes de terre à jar+57 (BBCH43), après que des plants de pomme de terre infectés par des larves au stade de développement L2 de *Meloidogyne spp* aient été traitées avec une solution d'extrait d'algue rouge de *Porphyra spp à* 30 g/L, avec une solution d'extrait d'algue rouge de *Porphyra spp à* 60 g/L, ou n'aient reçu aucun traitement (Témoin NT).
Figure 12 : La Figure 12 représente le nombre de nématodes dans les sols lors de la récoltes de pommes de terre à jas+108; BBCH49, après que des plants de pomme de terre infectés par des larves au stade de développement L2 de *Meloidogyne spp* aient été traitées avec une solution d'extrait d'algue rouge de *Porphyra spp à* 30 g/L, avec une solution d'extrait d'algue rouge de *Porphyra spp à* 60 /L, ou n'aient reçu aucun traitement (Témoin NT).

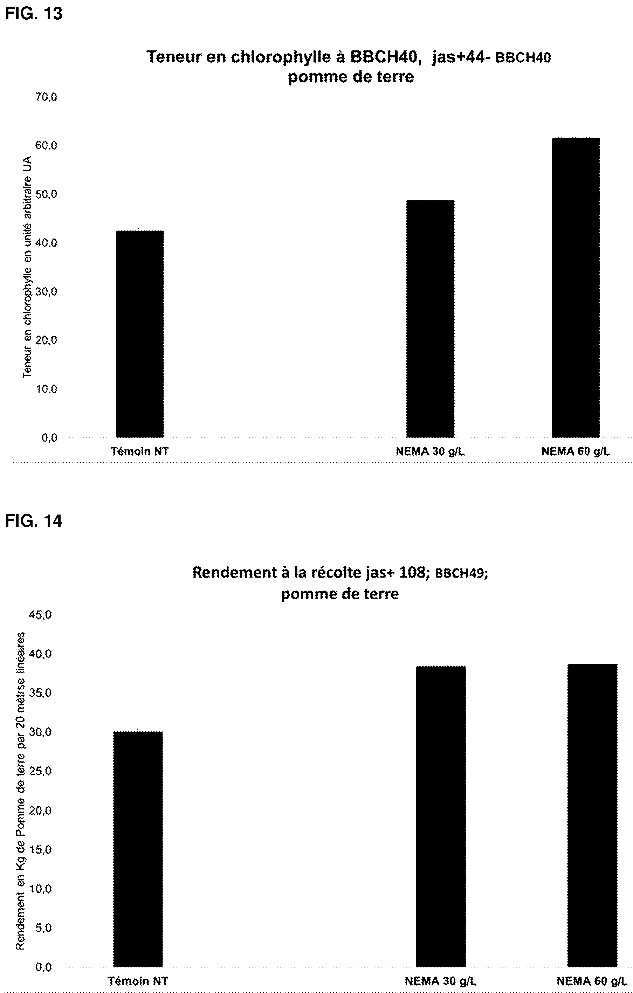

Figure 13 : La Figure 13 représente la teneur en chlorophylle mesurée en Unité Arbitraire (UA) mesurée sur les tissus foliaires des plants de pommes de terre à jar+44 (BBCH40), après que des plants de pomme de terre infectés par des larves au stade de développement L2 de *Meloidogyne spp* aient été traitées avec une solution d'extrait d'algue rouge de *Porphyra spp à* 30 g/L, avec une solution d'extrait d'algue rouge de *Porphyra spp à* 60 g/L, ou n'aient reçu aucun traitement (Témoin NT).
Figure 14 : La Figure 14 représente le rendement en kg pour vingt mètres linéaires à la récolte de pommes de terre à jar+108, après que des plants de pomme de terre infectés par des larves au stade de développement L2 de *Meloidogyne spp* aient été traitées avec une solution d'extrait d'algue rouge de *Porphyra spp à* 30 g/L, avec une solution d'extrait d'algue rouge de *Porphyra spp à* 60 g/L, ou n'aient reçu aucun traitement (Témoin NT).

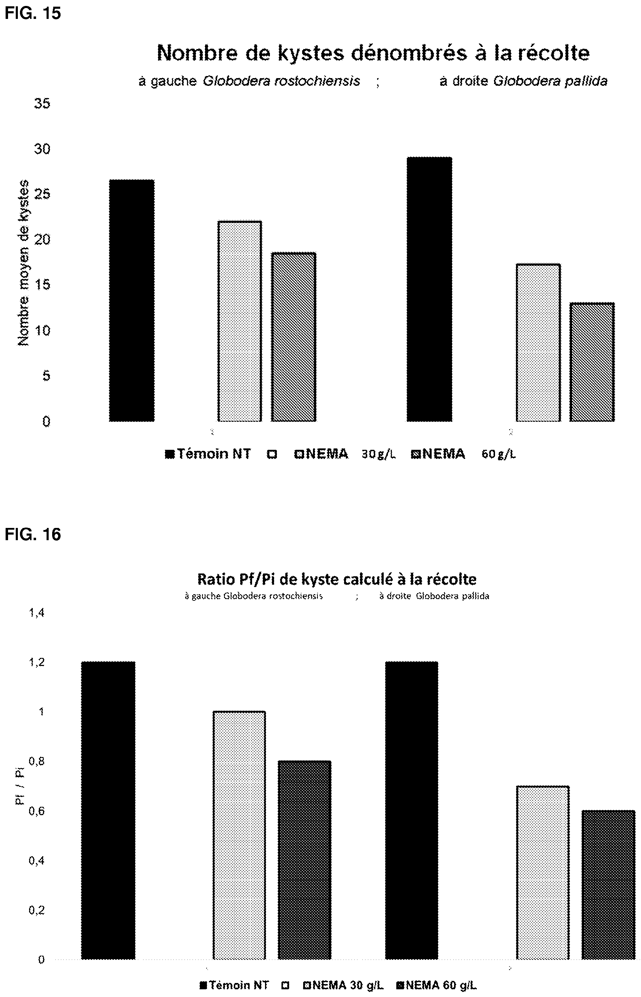

Figure 15 : La Figure 15 représente le nombre de kystes de *Globodera rostochiensis* et de *Globodera pallida* dénombrés à la récolte de pommes de terre, après que des plants de pomme de terre infectés par nématodes *Globodera rostochiensis* et de *Globodera pallida* aient été traités avec une solution d'extrait d'algue rouge de *Porphyra spp à* 30 g/L, avec une solution d'extrait d'algue rouge de *Porphyra spp à* 60 g/L, ou n'aient reçu aucun traitement (Témoin NT).
Figure 16 : La Figure 16 représente le ratio Pf/Pi de kystes de *Globodera rostochiensis* et de *Globodera pallida à* la récolte de pommes de terre, après que des plants de pomme de terre infectés par nématodes *Globodera rostochiensis* et de *Globodera pallida* aient été traités avec une solution d'extrait d'algue rouge de *Porphyra spp* à 30 g/L, avec une solution d'extrait d'algue rouge de *Porphyra spp à* 60 g/L, ou n'aient reçu aucun traitement (Témoin NT).

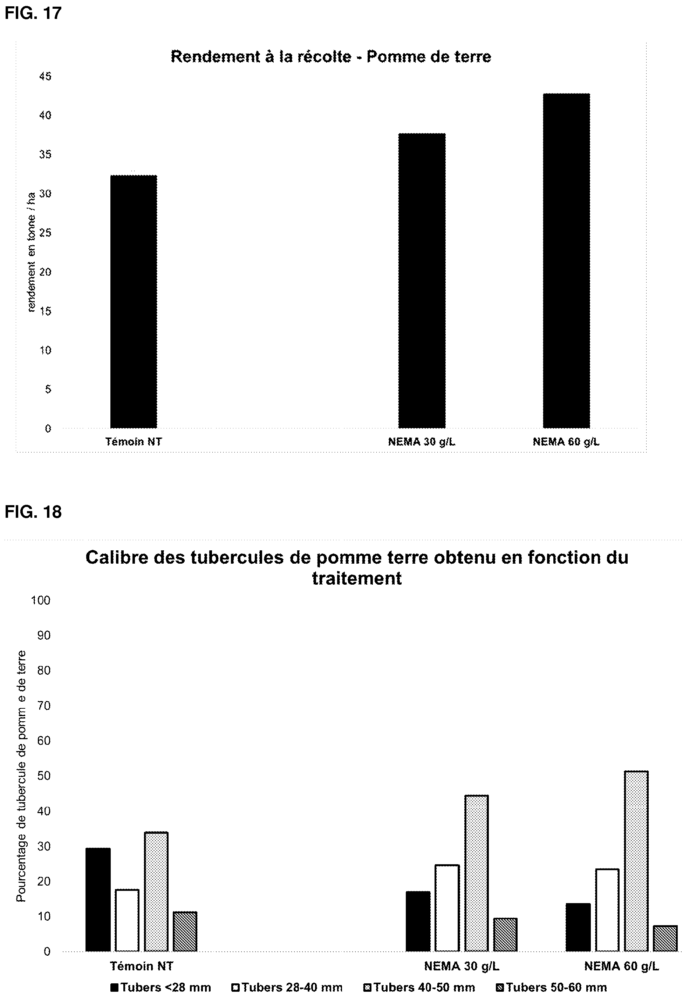

Figure 17 : La Figure 17 représente le rendement à la récolte de pommes de terre en tonne/hectare, après que des plants de pomme de terre infectés par nématodes *Globodera rostochiensis* et de *Globodera pallida* aient été traités avec une solution d'extrait d'algue rouge de *Porphyra spp à* 30 g/L, avec une solution d'extrait d'algue rouge de *Porphyra spp à* 60 g/L, ou n'aient reçu aucun traitement (Témoin NT).
Figure 18 : La Figure 18 représente la quantité moyenne de tubercules en tonne/hectare selon les calibres de tubercules (calibre inférieur à 28 mm, calibre compris entre 28 et 40 mm, calibre compris entre 40 et 50 mm, calibre compris entre 50 et 60 mm), après que des plants de pomme de terre infectés par nématodes *Globodera rostochiensis* et de *Globodera pallida* aient été traitées avec une solution d'extrait d'algue rouge de *Porphyra spp à* 30 g/L, avec une solution d'extrait d'algue rouge de *Porphyra spp* à 60 g/L, ou n'aient reçu aucun traitement (Témoin NT).

### EXEMPLES

### Exemple 1: Préparation d'un extrait d'algue rouge pour son utilisation selon l'invention

### Exemple 1A : Préparation d'un extrait d'alaue rouge de type Porohvra spp (également appelé Pvrooia spp) pour son utilisation selon l'invention

### Méthode

Un extrait de *Porphyra spp* (également appelé *Pyropia spp*) a été préparé en suivant le procédé suivant :
Etape 1 : 100 kg d'algue rouge séchée de type *Porphyra spp* ont été broyés et passés au travers d'un tamis afin d'obtenir des fragments de taille inférieure ou égale à 2 mm.
Etape 2 : les 100 kg d'algue rouge séchée et broyée obtenus à l'étape 1 ont été mélangés à 2800 kg d'eau et 5 kg d'acide sulfurique (H₂SO₄) à 40°C. Le mélange a été maintenu sous agitation à une température de 40°C et à un pH de 2,5, durant 3 heures.
Etape 3 : le mélange obtenu à l'étape 2 (2400 kg) a été centrifugé à l'aide d'un décanteur centrifuge industriel, puis le surnageant a été filtré à 50 µm. L'extrait a ensuite été concentré par évaporation à une température inférieure à 57°C, afin d'obtenir 640 kg d'extrait liquide concentré comprenant 8 % de matière sèche (à savoir 80 g de matière sèche par litre d'extrait concentré). L'extrait concentré ainsi obtenu correspond à l'extrait utilisé dans les exemples ci-après.

### Exemple 1B : Préparation d'un extrait d'algue rouge de type Palmaria spp qui n'est pas utilisé dans le cadre de l'invention

### Méthode

Un extrait de *Palmaria spp* a été préparé en suivant le procédé suivant :
Etape 1 : 100 kg d'algue rouge séchée de type *Palmaria spp* ont été broyés et passés au travers d'un tamis afin d'obtenir des fragments de taille inférieure ou égale à 2 mm.
Etape 2 : les 100 kg d'algue rouge séchée et broyée obtenus à l'étape 1 ont été mélangés à 900 kg d'eau et 1.4 kg d'acide sulfurique (H₂SO₄). Le mélange a été maintenu sous agitation à une température de 40°C et à un pH de 2.5, durant 3 heures.
Etape 3 : le mélange obtenu à l'étape 2 (880 kg) a été centrifugé à l'aide d'un décanteur centrifuge industriel, puis le surnageant a été filtré à 50 µm. L'extrait a ensuite été concentré par évaporation à une température inférieure à 60°C, afin d'obtenir 446 kg d'extrait liquide concentré comprenant 11 % de matière sèche (à savoir 110 g de matière sèche par litre d'extrait concentré). L'extrait concentré ainsi obtenu correspond à l'extrait utilisé dans l'Exemple 2 ci-après.

### Exemple 2 : Effets nématostatique et/ou nématicide d'un extrait d'alaue rouge de Porphyra spp (Pyropia spp) et d'un extrait d'alaue rouge de Palmaria spp sur différents nématodes

### Conditions expérimentales :

Un test d'immobilisation des larves de nématodes a été réalisé afin de mesurer l'effet nématostatique et/ou nématicide de chacun des extraits d'algue rouge (*Porphyra spp* et *Palmaria spp*). Ce test a permis de déterminer le comportement des larves de nématodes (au stade larvaire L2 également appelé stade juvénile J2) lorsqu'elles ont été mises en contact avec l'extrait d'algue rouge puis transférées sur une membrane poreuse comme décrit en Figure 3A.

Les tests ont été réalisés sur des larves de nématodes appartenant aux groupes des nématodes phytoparasites facultatifs (*Ditylenchus dispaci, Xiphinema index*)*,* et aux groupes de nématodes phytoparasites obligatoires (*Meloidogyne javanica, Heterodera carotae, Heterodera schachtii, Globodera pallida).*

La mobilité des nématodes a été analysée afin de déterminer si l'extrait avait un effet nématicide et/ou nématostatique.

La Figure 3B montre que les nématodes ont réagi de trois façons différentes, une fois mis en contact avec l'extrait d'algue rouge:
- Une proportion de nématodes n'a pas recouvré leur mobilité, et ont été incapables de passer au travers de la membrane poreuse, ce qui reflète l'effet nématicide de l'extrait d'algue rouge.
- Une proportion de nématodes a recouvré leur mobilité au bout de 4 jours puis au bout de sept jours, et ont été capables de passer au travers de la membrane poreuse, ce qui reflète l'effet nématostatique de l'extrait d'algue rouge.
- Une première fraction de nématodes n'a pas recouvré sa mobilité au bout de quatre jours, et a été incapable de passer au travers de la membrane poreuse. Une seconde fraction de nématodes a recouvré sa mobilité. Dans ce cas, l'extrait d'algue rouge a donc eu un effet nématicide et nématostatique.

En condition témoin, les laves de nématodes mis en contact avec de l'eau (en lieu et place de l'extrait d'algue rouge), puis transférées sur une membrane poreuse, puis rincées avec de l'eau, ont recouvré immédiatement leur mobilité et sont passées au travers de la membrane poreuse.

Les résultats du test d'immobilisation réalisé avec l'extrait d'algue rouge de type *Porphyra spp* sont présentés dans le Tableau 1.

**Tableau 1 :**

| | **Phytoparasites sédentaires** | | | | **Phytoparasites facultatifs** | |
|---|---|---|---|---|---|---|
| | ***Meloidogyne javanica*** | ***Globodera* pallida** | ***Meterodera schachtii*** | ***Heterodera carotae*** | ***Xiphinema index*** | ***Ditylenchus dispaci*** |
| Effet nématicide | Oui | | | | | |
| Effet nématostati que | | | Oui | Oui | Oui | |
| Effet nématicide et nématostati que | | Oui | | | | Oui |

Les larves de nématodes du genre *Meloidogyne* (nématode endoparasite sédentaire, nématode à galle) ont été immobilisées de façon irréversible, ce qui reflète l'effet nématicide de l'extrait d'algue rouge préparé selon l'Exemple 1A sur ce groupe de nématode.

Une fraction des larves de nématodes du genre *Globodera* (nématode endoparasite sédentaire, nématode à kyste) a été immobilisée de façon irréversible. L'autre fraction des larves de nématodes a recouvré sa mobilité. Cela reflète l'effet nématicide et nématostatique de l'extrait d'algue rouge préparé selon l'Exemple 1A sur ce groupe de nématodes.

Les larves de nématodes du genre *Heterodera* (nématode endoparasite sédentaire, nématode à kyste) ont été immobilisées de façon réversible, ce qui reflète l'effet nématostatique de l'extrait d'algue rouge préparé selon l'Exemple 1A sur ce groupe de nématodes.

Les larves de nématodes du genre *Xiphinema* (nématode phytoparasite migrateur) ont été immobilisées de façon réversible, ce qui reflète l'effet nématostatique del'extrait d'algue rouge préparé selon l'Exemple 1A sur ce groupe de nématodes.

Une fraction des larves de nématodes du genre *Ditylenchus* (nématode phytoparasite facultatif) a été immobilisée de façon irréversible. L'autre fraction de larves de nématodes a recouvré sa mobilité. Cela reflète l'effet nématicide et nématostatique de l'extrait d'algue rouge préparé selon l'Exemple 1A sur ce groupe de nématodes.

Les résultats du test d'immobilisation réalisé avec l'extrait d'algue rouge de type *Palmaria spp* sont présentés dans le Tableau 2.

**Tableau 2 :**

| | **Phytoparasites sédentaires** | | | | **Phytoparasites facultatifs** | |
|---|---|---|---|---|---|---|
| | ***Meloid ogyne javanic a*** | ***Globode ra pallida*** | ***Heterod era schachtii*** | ***Heterod era carotae*** | ***Xiphinema index*** | ***Ditylenchus dispaci*** |
| Effet nématicide | oui | oui | | | non testé | non testé |
| Effet nématostatique | | | | | non testé | non testé |
| Effet nématicide et nématostatique | | | | oui | non testé | non testé |

Les larves de nématodes du genre *Meloidogyne* (nématode endoparasite sédentaire, nématode à galle) ont été immobilisées de façon irréversible, ce qui reflète l'effet nématicide de l'extrait d'algue rouge préparé selon l'Exemple 1B sur ce groupe de nématodes.

Les larves de nématodes du genre *Globodera* (nématode endoparasite sédentaire, nématode à kyste) ont été immobilisées de façon irréversible, ce qui reflète l'effet nématicide de l'extrait d'algue rouge préparé selon l'Exemple 1B sur ce groupe de nématodes.

Les larves de nématodes du genre *Heterodera* (nématode endoparasite sédentaire, nématode à kyste) ont été a été immobilisée de façon irréversible. L'autre fraction de larves de nématodes a recouvré sa mobilité. Ceci reflète l'effet nématostatique et nématicide de l'extrait d'algue rouge préparé selon l'Exemple 1B sur ce groupe de nématodes.

### Exemple 3 : Mise en évidence, en serres expérimentales (i.e. en conditions contrôlées), des effets d'un extrait d'alaue rouge Porphyra spp sur l'infestation de plants de tomate infectés par des larves de nématodes au stade de développement L2 du genreMeloidogyne incognita

### Conditions expérimentales

L'essai a été réalisé en serre expérimentale de recherche de façon à évaluer l'efficacité de l'extrait d'algue rouge de l'Exemple 1A (extrait d'algue rouge *Porphyra spp)* sur des plants de tomate (*Solanum lycopersicum*) transférés dans un sol sableux infesté par des larves de nématodes de *Meloidogyne incognita* au stade de développement L2 en une quantité de 0,8 larves par mL de sol sableux. La variété de tomate utilisée pour cet essai était la variété 505 F1, sensible à l'attaque de *Meloidogyne incognita.* Ce nématode a la capacité d'attaquer les racines des plants de tomate, provoquant la formation de galles sur les racines, et réduisant indirectement le développement du plant de tomate, la biomasse aérienne du plant de tomate, l'efficacité de l'activité photosynthétique (contenu en chlorophylle des feuilles) et donc la qualité de la production.

L'extrait concentré d'algue rouge de l'Exemple 1A a été dilué dans de l'eau afin d'obtenir une première solution à une concentration de 15,8 grammes d'extrait concentré par litre de solution (g/L) (comprenant 1,58 % d'extrait concentré dans la première solution) et une seconde solution à une concentration de 31,6 g/L (comprenant 3,16% d'extrait concentré dans la seconde solution). Les deux solutions ont été appliquées à la surface du sol sableux infesté par les larves de nématodes 5 jours avant le repiquage (jar-5) des plants de tomate, 1 jour après le repiquage, (jar+1), à jar+3, à jar+6, à jar+9 et à jar+12. 6 plants de tomate ont été testés pour chaque modalité. A la fin de l'essai (jar+30), les racines des plants de tomate ont été récupérées et l'indice de galles (gall index) a été déterminé. L'indice de galles est un système de mesure de notation du niveau d'infestation d'une racine par des nématodes à galle(s), permettant dans le cas présent de mesurer l'infestation de *Meloidogyne incognita.* Sur une échelle de 1 à 6, l'indice de galles informe sur le niveau d'infestation (1-2: 0-10% d'infestation; 2-3: 10-20% d'infestation; 3-4: 20-50% d'infestation; 4-5: 50-80% d'infestation; 5-6: 80-100% d'infestation).

Parallèlement, la hauteur des plants de tomate et la biomasse aérienne ont été mesurées à la fin de l'essai. De même, le contenu en chlorophylle a été déterminé.

### Résultats

Les résultats présentant l'indice de galles, sur des racines de tomates à jar+30, sont présentés en Figure 4. Ils montrent qu'en absence de traitement (Témoin non traité; témoin NT), l'indice de galles atteint la valeur de 5,6, ce qui signifie que de 80 à 100% des racines des plants de tomate étaient recouverts de galles. Lorsque la solution concentrée à 15, 8 g/L a été appliquée, l'indice de galles était de 4, soit une infestation d'environ 50%. Lorsque la solution concentrée à 31,6 g/L a été appliquée, l'indice de galles était de 3,6, soit une infestation de 20-50%. Cela montre que l'utilisation d'un extrait d'algue rouge selon l'invention permet une réduction significative de l'indice de galles, de façon dose dépendante.

Les résultats montrant la quantité de biomasse foliaire des plants de tomate à jar+30 sont présentés en Figure 5. Ils montrent qu'en absence de traitement (Témoin non traité; témoin NT), les plants de tomates ont développé une biomasse foliaire de 30 g en moyenne par plant de tomate).

Lorsque les solutions concentrées à 15, 8 g/L et 31,6 g/L ont été appliquées, la quantité de biomasse foliaire a été significativement supérieure à la biomasse du témoin NT (respectivement 50 g et 60g en moyenne par plant de tomate). Cela montre que l'utilisation d'un extrait d'algue rouge selon l'invention permet de réduire l'infestation des nématodes, ce qui a eu une conséquence directe sur la quantité de biomasse foliaire produite par les plants de tomate, de façon dose dépendante.

Les résultats montrant le contenu en chlorophylle des tissus foliaires des plants de tomate à jar+30 sont présentés en Figure 6. Ils montrent qu'en absence de traitement (Témoin non traité; témoin NT), les plants de tomates présentaient un contenu en chlorophylle de 46 UA (Unité Arbitraire) en moyenne par plant de tomate. Lorsque les solutions concentrées à 15,8 g/L et à 31,6 g/L ont été appliquées, le contenu en chlorophylle était respectivement de 48 UA et de 52 UA en moyenne par plant de tomate. Cette augmentation du contenu en chlorophylle des tissus foliaires est corrélée à l'augmentation de la biomasse foliaire.

### Exemple 4 : Mise en évidence, en serres expérimentales (i.e. en conditions contrôlées), des effets d'un extrait d'algue rouge Porphyra spp sur l'infestation de plants de betterave infectés par des larves de nématodes Heterodera schachtii au stade de développement L2 et effet sur la production de kystes par les larves de nématodes Heterodera schachtii

### Conditions expérimentales

L'essai a été réalisé en serre expérimentale de recherche afin d'évaluer l'efficacité d'un extrait d'algue rouge préparé selon l'Exemple 1A (extrait d'algue rouge *Porphyra spp)* sur des plants de betterave (*Beta vulgaris*) transférés dans un sol sableux infestés par 100-150 larves et kystes de *Heterodera schachtii* pour 100 mL de sol sableux. La variété de betterave utilisée pour cet essai était la variété *Fiametta,* qui est sensible à l'attaque de *Heterodera schachtii.* Ce nématode infeste les racines de betterave pour s'y reproduire, altérant ainsi la biomasse foliaire, de la biomasse racinaire, et du contenu en chlorophylle. En découle une altération de la production et la qualité des betteraves. *Heterodera schachtii* présente la particularité de produire à l'issu de son cycle d'infestation complet, une nouvelle génération de kystes. Cette génération de kystes produira des larves qui à leur tour infestera les plants de betterave.

L'extrait concentré d'algue rouge préparée selon l'Exemple 1A a été diluée dans de l'eau afin d'obtenir une première solution à une concentration de 15,8 g d'extrait concentré par litre de solution (g/L) (comprenant 1,58 % d'extrait concentré) et une seconde solution à une concentration de 31,6 g/L (comprenant 3,16% d'extrait concentré). Les deux solutions ont été appliquées 2 jours après le stade de semis (jas+2) des graines de betterave, à jas+4, à jar+7, à jar+6, à jar+10 et à jar+13. 4 blocs indépendants ensemencés avec des graines de betterave variété *Fiametta* ont été testés pour chaque modalité.

A la fin de l'essai (jar+36), les racines des plants de betterave ont été récupérées et la quantité de kystes produite a été déterminée. Parallèlement, la hauteur des plants de betterave, la biomasse foliaire et la biomasse racinaire ont également été mesurées à la fin de l'essai. De même, le contenu en chlorophylle a été déterminé.

### Résultats

Les résultats montrant le nombre de kystes de *Heterodera schachtii* produit à l'issu de l'essai, à jar+36, sont présentés en Figure 7. Ils montrent qu'en absence de traitement (Témoin non traité; témoin NT), le nombre moyen de kystes produits était de 35 kystes pour 100 mL de sol. Lorsque les solutions à 15, 8 g/L et à 31,6 g/L ont été appliquées, le nombre moyen de kystes produit était respectivement de 26 kystes et de 23 kystes. Cette diminution du nombre de kystes produits, traduit une réduction significative du nombre de larves au stade de développement L2 ayant infectées les racines de betteraves suite au traitement avec les deux solutions, de façon dose dépendante.

Les résultats montrant la quantité de biomasse foliaire des plants de betterave à jar+36 sont présentés en Figure 8. Ils montrent qu'en absence de traitement (Témoin non traité; témoin NT), les plants de betterave ont développé une biomasse foliaire de 23 g en moyenne par plant. Lorsque les solutions à 15,8 g/L et à 31,6 g/L ont été appliquées, la quantité de biomasse foliaire produite était respectivement de 24 g et de 24,5 g en moyenne par plant de betterave. Cette augmentation de la quantité de biomasse foliaire par rapport au témoin NT traduit indirectement une réduction de l'intensité de l'attaque des larves et œufs du nématode *Heterodera schachtii.*

Les résultats montrant la quantité de biomasse racinaire des plants de betterave à jar+36 sont présentés en Figure 9. Ils montrent qu'en absence de traitement (Témoin non traité; témoin NT), les plants de betterave ont développé une biomasse racinaire de 15 g en moyenne par plante. Lorsque les solutions à 15,8 g/L et à 31,6 g/L ont été appliquées aux plants de betterave, la quantité de biomasse racinaire produite était respectivement de 15,5 g et de 15,7 g en moyenne par plant de betterave. Cette augmentation de la quantité de biomasse racinaire produite traduit indirectement une réduction de l'intensité de l'attaque des larves et œufs du nématode *Heterodera schachtii.*

Les résultats montrant le contenu en chlorophylle des tissus foliaires des plants de betterave à jar+36 sont présentés en Figure 10. Ils montrent qu'en absence de traitement (Témoin non traité; témoin NT), les plants de betterave présentaient un contenu en chlorophylle de 220 UA en moyenne par plante. Lorsque les solutions à 15,8 g/L et à 31,6 g/L ont été appliquées aux plants, le contenu en chlorophylle était respectivement de 260 UA et de 265 UA en moyenne par plant de betterave. Cette augmentation du contenu en chlorophylle des tissus foliaires découle de l'augmentation de la biomasse foliaire produite consécutive à l'utilisation d'un extrait d'algue rouge, de façon dose dépendante.

### Exemple 5 : Mise en évidence, en plein champ, d'un extrait d'algue rouge Porphyra spp sur l'infestation de plants de pomme de terre infectés par des larves de nématode de Meloidoqyne spp.au stade de développement L2

### Conditions expérimentales

L'essai a été réalisé en plein champ, sur des parcelles préalablement sélectionnées pour la présence de nématodes *Meloidogyne incognita,* de façon à évaluer l'efficacité de l'extrait d'algue rouge préparé selon l'Exemple 1A (extrait d'algue rouge *Porphyra spp*) sur des plants de pomme de terre (*Solanum tuberosum*)*.* La variété de pomme de terre utilisée pour cet essai était la variété *AGRIA,* variété sensible à l'attaque de *Meloidogyne incognita.* Ce nématode infeste les racines de pomme de terre, provoquant la formation de galle sur les racines, et réduisant indirectement le développement du plant de pomme de terre, la biomasse aérienne du plan de pomme de terre, l'efficacité de l'activité photosynthétique (contenu en chlorophylle des feuilles) et donc la qualité de la production.

L'extrait concentré d'algue rouge préparée selon l'Exemple 1A a été diluée dans de l'eau afin d'obtenir une première solution à une concentration de 30 g d'extrait concentré par litre de solution (g/L) (comprenant 3 % d'extrait concentré) et une seconde solution à une concentration de 60 g/L (comprenant 6% d'extrait concentré).

Les deux solutions ont été appliquées 1 jour après le stade semis, (jas+1), à jar+15, à jar+30, à jar+45 et à jar+60. L'indice de galle est un système de mesure de notation du niveau d'infestation d'une racine par les larves au stade de développement L2 des nématodes à galle, de type *Meloidogyne incognita,* comme décrit dans l'Exemple 3. Le nombre de larves de nématodes du genre *Meloidogyne* a été déterminé dans des échantillons de sol. Le contenu en chlorophylle des tissus foliaires des plants de pommes de terre à jar+44 (BBCH40) a été déterminé. Enfin, les tubercules de pomme de terre ont été récupérés et classés, en fonction de leur calibre.

### Résultats

Les résultats montrant l'indice de galle, à jar+57 (BBCH43), sont présentés en Figure 11. Ils montrent qu'en absence de traitement, l'indice de galle était de 3,0. Lorsque les solutions à 30 g/L et à 60 g/L ont été appliquées aux plants de pomme de terre, l'indice de galle était respectivement de 0,6 et de 0,5. Cette diminution de l'indice de galle montre l'effet de l'extrait d'algue rouge aux deux concentrations testées.

Les résultats montrant la quantité de nématodes présents dans les sols à la récolte (jas+108; BBCH49) sont présentés en Figure 12. Ils montrent qu'en absence de traitement, les échantillons de sol contenaient une population de nématodes à la récolte quatre fois supérieure à la population de nématodes le jour du semi (210 larves à la récolte de nématode contre 55 larves le jour du semis). Cette valeur du nombre de larves reflète l'intensité de l'infestation en absence de traitement. Lorsque les solutions à 30 g/L et à 60 g/L ont été appliquées, la quantité de nématodes était respectivement de 110 larves de nématode à la récolte contre 60 larves au semis (soit une dynamique de reproduction de 1,5) et de 120 larves de nématode à la récolte contre 85 larves au semis (soit une dynamique de reproduction de 1,4).

Les résultats montrant le contenu en chlorophylle des tissus foliaires des plants de pommes de terre à jar+44 (BBCH40) sont présentés en Figure 13. Ils montrent qu'en absence de traitement (Témoin non traité; témoin NT), les plants de pommes de terre présentaient un contenu en chlorophylle de 42 UA en moyenne par plant. Lorsque les solutions à 30 g/L et à 60 g/L ont été appliquées aux plants, le contenu en chlorophylle était respectivement de 48 UA et de 61 UA.

Les résultats montrant le rendement à la récolte à jar+108 sont présentés en Figure 14. Ils montrent qu'en absence de traitement (Témoin non traité; témoin NT), le rendement en pomme terre a atteint la valeur de 30 Kg de pomme de terre pour 20 mètres linéaires. Lorsque les solutions à 30 g/L et à 60 g/L ont été appliquées aux plants, le rendement en pomme de terre était respectivement de 38,3 Kg de pomme de terre pour 20 mètres linéaires et de 38,6 Kg de pomme de terre pour 20 mètres linéaires.

### Exemple 6 : Mise en évidence, en plein champ, des effets d'un extrait d'alaue rouge Porohvra spp sur l'infestation de plants de pomme de terre par des nématodes des genres Globodera pallida et Globodera rostochiensis.

### Conditions expérimentales

Un essai visant à évaluer l'efficacité d'un extrait d'algue rouge préparé selon l'Exemple 1A (extrait d'algue rouge *Porphyra spp)* sur une culture de pomme de terre variété Agata en plein champ, a été réalisé sur une parcelle présentant des taux d'infestation à *Globodera rostochiensis* de 24,7 kystes pour 100mL de sol et de 23,7 kystes de *Globodera pallida* pour 100 mL de sol. La variété de pomme de terre utilisée était la variété *Agata,* variété sensible à l'attaque des deux nématodes à kyste susmentionnés. Les larves au stade de développement L2 infestent les tubercules et les jeunes racines de pomme de terre, s'y reproduisent, altérant ainsi la production et la qualité de la pomme de terre (biomasse foliaire, biomasse racinaire, contenu en chlorophylle). Ces nématodes à kyste présentent la particularité de produire à l'issu de leur cycle d'infestation complet, une nouvelle génération de kystes. Cette génération de kystes produira des larves qui à leur tour infesteront les plants de pomme de terre.

L'extrait concentré d'algue rouge préparée selon l'Exemple 1A a été diluée dans de l'eau afin d'obtenir une première solution à une concentration de 30 g d'extrait concentré par litre de solution (g/L) (comprenant 3 % d'extrait concentré) et une seconde solution à une concentration de 60 g/L (comprenant 6% d'extrait concentré).

Les deux solutions ont été appliquées au stade du semis des tubercules de pomme de terre (jas+10), à jas+20, à jas+30, à jas+35, à jas+40. Le dispositif expérimental a été réalisé selon un plan en bloc de Fisher à quatre répétitions totalement aléatoires dans le champ.

A la récolte, les racines tubercules de pommes de terre ont été récupérées et classées en fonction de leur calibre.

La quantité de kystes dans le sol a été déterminée à la récolte. De même, le rapport Pf/Pi a été déterminé. Le rapport Pf/Pi (nombre de kystes dénombrés à la récolte Pf, divisé par le nombre de kystes dénombrés au stade de semis Pi) renseigne sur l'efficacité du traitement à perturber le cycle infectieux du nématode, et à réduire la quantité de kystes présents dans le sol à l'issue de la récolte. Le rendement en pomme de terre a également été déterminé. Enfin, les tubercules de pomme de terre ont été récupérés et classés en fonction de leur calibre.

### Résultats

Les résultats présentant le nombre de kystes de *Globodera rostochiensis* et de *Globodera pallida* produit à l'issu de l'essai, à la récolte, sont présentés en Figure 15. Ils montrent qu'en absence de traitement (Témoin non traité; témoin NT), le nombre moyen de kystes dénombrés était de 26 et 29 kystes pour 100 mL de sol pour *Globodera rostochiensis* et *Globodera pallida* respectivement. Lorsque la solution à 30 g/L a été appliquée aux plants, le nombre de kystes dénombrés était de 22 et 17 kystes pour 100 mL de sol pour *Globodera rostochiensis* et *Globodera pallida* respectivement. Lorsque la solution à 60 g/L a été appliquée aux plants, le nombre de kystes dénombrés était de 19 et 12 kystes pour 100 mL de sol, pour *Globodera rostochiensis* et *Globodera pallida* respectivement. Cette diminution du nombre de kystes montre la réduction du nombre de larves au stade de développement L2 ayant infecté les racines des plants de pomme de terre, consécutivement à l'utilisation d'un extrait d'algue rouge selon l'invention.

Les résultats présentant le ratio Pf/Pi du nombre de kystes de *Globodera rostochiensis* et de *Globodera pallida* produits à l'issu de l'essai, à la récolte, sont présentés en Figure 16. Ils montrent qu'en absence de traitement (Témoin non traité; témoin NT), le Pf/Pi était de 1,2 pour *Globodera rostochiensis* et *Globodera pallida.* Lorsque la solution à 30 g/L a été appliquée aux plants, le ratio Pf/Pi du nombre de kystes était de 1 et 0,7 pour *Globodera rostochiensis* et *Globodera pallida* respectivement. Lorsque la solution à 60 g/L a été appliquée aux plants, le ratio Pf/Pi du nombre de kystes était de 0,8 et 0,6 pour *Globodera rostochiensis* et *Globodera pallida* respectivement. Cette diminution significative du ratio Pf/Pi montre l'effet d'un extrait d'algue rouge vis-à-vis des nématodes *Globodera rostochiensis et Globodera pallida.*

Les résultats montrant le rendement à la récolte sont présentés en Figure 17. Ils montrent qu'en absence de traitement (Témoin non traité; témoin NT), le rendement en pomme de terre atteignait 31 tonnes/ha. Lorsque les solutions à 30 g/L et à 60 g/L ont été appliquées aux plants, le rendement était respectivement de 39 tonnes/ha et de 41 tonnes/ha. Cette augmentation du rendement traduit indirectement une réduction de l'intensité d'attaque des nématodes *Globodera rostochiensis* et *Globodera pallida,* consécutive à l'utilisation d'un extrait d'algue rouge selon l'invention.

Les résultats montrant la qualité de la récolte sont présentés en Figure 18. Ici, la qualité de la récolte a été caractérisée par le calibre des tubercules de pommes de terre à la récolte. Plus le calibre est élevé, meilleure est la qualité de la récolte. Les résultats obtenus montrent qu'en absence de traitement (Témoin non traité; témoin NT), la proportion de tubercules de calibre inférieur à 40 mm était de 15%. Pour le témoin, la proportion de tubercules de calibre comprise entre 40 et 50 mm, entre 50 et 60 mm, puis supérieur à 60 mm, était respectivement de 11%, 4 et 2%. Lorsque les solutions à 30 g/L et à 60 g/L ont été appliquées aux plants, on a constaté une plus grande proportion de tubercules de calibre supérieur à 40 mm (voir tableau 2, respectivement 23% et 27% contre 17% pour le témoin).

**Tableau 3 :**

| **Calibre des tubercules de pommes de terre** | **Condition Témoin** | **Solution d'extrait à 30 g/L** | **Solution d'extrait à 60 g/L** |
|---|---|---|---|
| | **Nombre de tubercules en %** | **Nombre de tubercules en %** | **Nombre de tubercules en %** |
| **Inférieur à 28 mm** | 10% | 7% | 6% |
| **Compris entre 28 et 40 mm** | 5% | 9% | 10% |
| **Entre 40 et 50 mm** | 11% | 17% | 22% |
| **Entre 50 et 60 mm** | 4% | 4% | 3% |
| **Supérieur à 60 mm** | 2% | 2% | 2% |

## Revendications

1. Utilisation d'un extrait d'algue rouge comme agent nématostatique vis-à-vis des nématodes et/ou comme agent nématicide vis-à-vis des nématodes, **caractérisée en ce que** l'algue rouge est choisie parmi *Porphyra spp, Porphyra columbina, Porphyra acanthophora, Porphyra tenera, Porphyra perforata, Porphyra vietnamensis, Porphyra rosengurttii, Porphyra yezoensis, Porphyra haitanensis,* et
dans laquelle l'utilisation n'est pas destinée au traitement thérapeutique de l'animal ou l'être humain.

2. Procédé de traitement d'un sol destiné à favoriser la croissance d'une plante en réduisant l'accès des nématodes aux racines de ladite plante ou en éliminant les nématodes présents dans ledit sol, ledit procédé comprenant l'apport audit sol d'un extrait d'algue rouge, **caractérisé en ce que** l'algue rouge est choisie parmi *Porphyra spp, Porphyra columbina, Porphyra acanthophora, Porphyra tenera, Porphyra perforata, Porphyra vietnamensis, Porphyra rosengurttii, Porphyra yezoensis, Porphyra haitanensis.*

3. Utilisation selon la revendication 1 ou procédé selon la revendication 2, **caractérisée en ce que** l'algue rouge est choisie parmi *Porphyra spp* ou *Porphyra columbina.*

4. Utilisation ou procédé selon l'une quelconque des revendications 1 à 3, **caractérisée en ce que** l'extrait d'algue rouge est obtenu par extraction aqueuse à un pH acide.

5. Utilisation ou procédé selon l'une quelconque des revendications 1 à 4, **caractérisée en ce que** l'extrait d'algue rouge est obtenu par extraction aqueuse à un pH compris entre 1 et 7, de préférence entre 2 et 6, encore plus préférentiellement entre 2 et 5.

6. Utilisation ou procédé selon l'une quelconque des revendications 1 à 5, **caractérisée en ce que** l'extrait d'algue rouge est obtenu par extraction aqueuse à une température comprise entre 10 et 50°C, préférentiellement entre 20 et 50°C.

7. Utilisation ou procédé selon l'une quelconque des revendications 1 à 6, **caractérisée en ce que** les nématodes sont des nématodes pathogènes, de préférence choisis parmi les familles *des Anguinidae, des Longidoridae, des Tylenchulidae, des Pratylenchidae, des Hoplolaimidae, des Tylenchulidae, des Trichodoridae, des Heterodoridae, et des Meloidogynidae.*

8. Procédé selon l'une quelconque des revendications 2 à 7, dans lequel l'extrait est apporté au sol au stade du semis, au stade de pré-émergence de la plante et/ou au stade de post-émergence de la plante.

9. Procédé selon l'une quelconque des revendications 2 à 8, dans lequel l'extrait est apporté au sol en une quantité allant de 1 à 50 kg/ha, de préférence allant de 1 à 10 kg/ha, de préférence environ 5 kg/ha.

10. Utilisation ou procédé selon l'une quelconque des revendications 1 à 9, dans lequel la plante est choisie parmi la betterave, le maïs, le blé dur, le colza, la carotte, la pomme de terre, les solanacées, les cucurbitacées, la laitue ou la vigne.

11. Procédé selon l'une quelconque des revendications 2 à 10, ne comprenant pas l'apport audit sol d'un acide autre que les acides naturellement présents dans l'algue rouge utilisée pour préparer l'extrait d'algue rouge, de préférence le procédé ne comprend pas l'apport audit sol d'un acide carboxylique, par exemple un acide carboxylique choisi parmi l'acide formique, l'acide acétique, l'acide lactique, l'acide citrique, l'acide oxalique, l'acide propionique, l'acide malique, l'acide tartrique, l'acide fumarique, l'acide gluconique, l'acide sorbique et l'acide butyrique.

12. Utilisation ou procédé selon l'une quelconque des revendications 1 à 11, **caractérisé en ce que** l'extrait d'algue rouge est dépourvu d'acide autre que les acides naturellement présents dans l'algue rouge utilisée pour préparer l'extrait d'algue rouge.

13. Utilisation ou procédé selon l'une quelconque des revendications 1 à 12, **caractérisé en ce que** l'extrait d'algue rouge est dépourvu d'acide carboxylique.

14. Utilisation ou procédé selon l'une quelconque des revendications 1 à 13, **caractérisé en ce que** l'extrait d'algue rouge est dépourvu d'acide carboxylique choisi parmi l'acide formique, l'acide acétique, l'acide lactique, l'acide citrique, l'acide oxalique, l'acide propionique, l'acide malique, l'acide tartrique, l'acide fumarique, l'acide gluconique, l'acide sorbique et l'acide butyrique.

15. Utilisation ou procédé selon l'une quelconque des revendications 1 à 14, **caractérisé en ce que** l'extrait d'algue rouge est dépourvu d'acide formique.

## Patentansprüche

1. Verwendung eines Rotalgenextrakts als nematostatisches Mittel gegen Nematoden und/oder als nematizides Mittel gegen Nematoden, **dadurch gekennzeichnet, dass** die Rotalge ausgewählt ist aus *Porphyra spp, Porphyra columbina, Porphyra acanthophora, Porphyra tenera, Porphyra perforata, Porphyra vietnamensis, Porphyra rosengurtth, Porphyra yezoensis, Porphyra haitanensis,* und wobei die Verwendung nicht zur therapeutischen Behandlung von Tieren oder menschlichen Wesen ausgelegt ist.

2. Verfahren zur Behandlung eines Bodens, das ausgelegt ist, um das Wachstum einer Pflanze zu begünstigen, indem der Zugang der Nematoden zu den Wurzeln der Pflanze reduziert wird oder die Nematoden beseitigt werden, die in dem Boden vorhanden sind, wobei das Verfahren den Eintrag eines Rotalgenextrakts in den Boden umfasst, **dadurch gekennzeichnet, dass** die Rotalge ausgewählt ist aus *Porphyra spp, Porphyra columbina, Porphyra acanthophora, Porphyra tenera, Porphyra perforata, Porphyra vietnamensis, Porphyra rosengurtth, Porphyra yezoensis, Porphyra haitanensis.*

3. Verwendung nach Anspruch 1 oder Verfahren nach Anspruch 2, **dadurch gekennzeichnet, dass** die Rotalge ausgewählt ist aus *Porphyra spp oder Porphyra columbina.*

4. Verwendung oder Verfahren nach einem der Ansprüche 1 bis 3, **dadurch gekennzeichnet, dass** der Rotalgenextrakt durch wässrige Extraktion bei einem sauren pH-Wert erhalten wird.

5. Verwendung oder Verfahren nach einem der Ansprüche 1 bis 4, **dadurch gekennzeichnet, dass** der Rotalgenextrakt durch wässrige Extraktion bei einem pH-Wert im Bereich zwischen 1 und 7, vorzugsweise zwischen 2 und 6, noch bevorzugter zwischen 2 und 5 erhalten wird.

6. Verwendung oder Verfahren nach einem der Ansprüche 1 bis 5, **dadurch gekennzeichnet, dass** der Rotalgenextrakt durch wässrige Extraktion bei einer Temperatur im Bereich zwischen 10 und 50 °C, vorzugsweise zwischen 20 und 50 °C erhalten wird.

7. Verwendung oder Verfahren nach einem der Ansprüche 1 bis 6, **dadurch gekennzeichnet, dass** die Nematoden pathogene Nematoden sind, vorzugsweise ausgewählt aus den Familien der *Anguinidae, der Longidoridae, der Tylenchulidae, der Pratylenchidae, der Hoplolaimidae, der Tylenchulidae, der Trichodoridae, der Heterodoridae und der Meloidogyndae.*

8. Verfahren nach einem der Ansprüche 2 bis 7, wobei der Extrakt in den Boden im Zustand des Semis, im Zustand des Vorauflaufs der Pflanze und/oder im Stadium des Nachauflaufs der Pflanze eingetragen wird.

9. Verfahren nach einem der Ansprüche 2 bis 8, wobei der Extrakt in den Boden in einer Menge eingetragen wird, die von 1 bis 50 kg/ha reicht, vorzugsweise von 1 bis 10 kg/ha, vorzugsweise ungefähr 5 kg/ha.

10. Verwendung oder Verfahren nach einem der Ansprüche 1 bis 9, wobei die Pflanze ausgewählt ist aus Rübe, Mais, Hartweizen, Raps, Karotte, Kartoffel, Nachtschattengewächs, Kürbisgewächs, Kopfsalat oder Weinrebe.

11. Verfahren nach einem der Ansprüche 2 bis 10, nicht umfassend den Eintrag in den Boden einer Säure außer den in der Rotalge natürlich vorhandenen Säuren, die verwendet wird, um den Rotalgenextrakt vorzubereiten, wobei vorzugsweise das Verfahren den Eintrag in den Boden einer Carbonsäure, z. B. einer Carbonsäure, ausgewählt aus der Ameisensäure, der Essigsäure, der Milchsäure, der Zitronensäure, der Oxalsäure, der Propionsäure, der Apfelsäure, der Weinsäure, der Fumarsäure, der Gluconsäure, der Sorbinsäure und der Buttersäure nicht umfasst.

12. Verwendung oder Verfahren nach einem der Ansprüche 1 bis 11, **dadurch gekennzeichnet, dass** der Rotalgenextrakt keine andere Säure außer den in der Rotalge natürlich vorhandenen Säuren aufweist, die verwendet wird, um den Rotalgenextrakt vorzubereiten.

13. Verwendung oder Verfahren nach einem der Ansprüche 1 bis 12, **dadurch gekennzeichnet, dass** der Rotalgenextrakt keine Carbonsäure aufweist.

14. Verwendung oder Verfahren nach einem der Ansprüche 1 bis 13, **dadurch gekennzeichnet, dass** der Rotalgenextrakt keine Carbonsäure, ausgewählt aus der Ameisensäure, der Essigsäure, der Milchsäure, der Zitronensäure, der Oxalsäure, der Propionsäure, der Apfelsäure, der Weinsäure, der Fumarsäure, der Gluconsäure, der Sorbinsäure und der Buttersäure umfasst.

15. Verwendung oder Verfahren nach einem der Ansprüche 1 bis 14, **dadurch gekennzeichnet, dass** der Rotalgenextrakt keine Ameisensäure umfasst.

## Claims

1. A use of a red alga extract as nematostatic agent against nematodes and/or as a nematicidal agent against nematodes,
wherein the red alga is selected from Porphyra spp, Porphyra columbina, Porphyra acanthophora, Porphyra tenera, Porphyra perforata, Porphyra vietnamensis, Porphyra rosengurttii, Porphyra yezoensis, Porphyra haitanensis, even more preferably Porphyra spp or Porphyra columbina, and
wherein the use is not intended for animals or humans.

2. A method for treating soil to promote growth of a plant by reducing nematodes access to the roots of said plant and/or by eliminating nematodes present in said soil, said method comprising supplying said soil with a red alga extract,
wherein the red alga is selected from *Porphyra spp, Porphyra columbina, Porphyra acanthophora, Porphyra tenera, Porphyra perforata, Porphyra vietnamensis, Porphyra rosengurttii, Porphyra yezoensis, Porphyra haitanensis,* even more preferably *Porphyra spp or Porphyra columbina.*

3. The use according to claim 1 or method according to claim 2, wherein the red alga is selected from *Porphyra spp or Porphyra columbina.*

4. The use or method according to any one of claims 1 to 3, wherein the red alga extract is obtained by aqueous extraction at an acidic pH.

5. The use or method according to any one of claims 1 to 4, wherein the red alga extract is obtained by aqueous extraction at a pH comprised between 1 and 7, preferably between 2 and 6, even more preferably between 2 and 5.

6. The use or method according to any one of claims 1 to 5, wherein the red alga extract is obtained by aqueous extraction at a temperature comprised between 10 and 50°C, preferably between 20 and 50°C.

7. The use or method according to any one of claims 1 to 6, wherein the nematodes are pathogenic nematodes, preferably selected from the families *Anguinidae, Longidoridae, Tylenchulidae, Pratylenchidae, Hoplolaimidae, Tylenchulidae, Trichodoridae, Heterodoridae, and Meloidogynidae.*

8. The method according to any one of claims 2 to 7, wherein the extract is supplied to the soil at the sowing stage, at the pre-emergence stage of the plant and/or at the post-emergence stage of the plant.

9. The method according to any one of claims 2 to 8, wherein the extract is supplied to the soil in an amount ranging from 1 to 50 kg/ha, preferably ranging from 1 to 10 kg/ha, preferably about 5 kg/Ha.

10. The method according to any one of claims 2 to 9, wherein the plant is selected from beets, corn, durum wheat, rapeseed, carrots, potatoes, solanaceae, cucurbits, lettuce or vine.

11. The method according to any one of claims 2 to 10, not comprising the supply to said soil of an acid other than the acids naturally present in the red alga used to prepare the red alga extract, preferably the method does not comprise the supply to said soil of a carboxylic acid, for example a carboxylic acid selected from formic acid, acetic acid, lactic acid, citric acid, oxalic acid, propionic acid, malic acid, tartaric acid, fumaric acid, gluconic acid, sorbic acid and butyric acid.

12. The use or method according to any one of claims 1 to 11, wherein the red alga extract is devoid of acid other than the acids naturally present in the red alga used to prepare the red alga extract.

13. The use or method according to any one of claims 1 to 12, wherein the red alga extract is devoid of carboxylic acid.

14. The use or method according to any one of claims 1 to 13, wherein the red alga extract is devoid of carboxylic acid selected from formic acid, acetic acid, lactic acid, citric acid, oxalic acid, propionic acid, malic acid, tartaric acid, fumaric acid, gluconic acid, sorbic acid and butyric acid.

15. The use or method according to any one of claims 1 to 14, wherein the red alga extract is devoid of formic acid.
